(19) Europäisches Patentamt / European Patent Office / Office européen des brevets

(11) EP 1 776 406 B1

(12) **FASCICULE DE BREVET EUROPEEN**

(45) Date de publication et mention de la délivrance du brevet:
**11.01.2012 Bulletin 2012/02**

(21) Numéro de dépôt: **05795980.1**

(22) Date de dépôt: **10.08.2005**

(51) Int Cl.:
***C08G 64/02*** $^{(2006.01)}$ ***C08G 64/30*** $^{(2006.01)}$

(86) Numéro de dépôt international:
**PCT/FR2005/002065**

(87) Numéro de publication internationale:
**WO 2006/021676 (02.03.2006 Gazette 2006/09)**

(54) **POLYCARBONATE DE GLYCÉROL, COMPOSITIONS ORGANIQUES LE CONTENANT ET PROCÉDÉ D'OBTENTION DESDITES COMPOSITIONS**

GLYCEROL-POLYCARBONAT, ORGANISCHE ZUSAMMENSETZUNGEN DAMIT UND VERFAHREN ZUM ERHALT BESAGTER ZUSAMMENSETZUNGEN

GLYCEROL POLYCARBONATE, ORGANIC COMPOSITIONS CONTAINING SAME AND METHOD FOR OBTAINING SAID COMPOSITIONS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.08.2004 FR 0408796**

(43) Date de publication de la demande:
**25.04.2007 Bulletin 2007/17**

(73) Titulaires:
- **Condat**
  **38670 Chasse sur Rhône (FR)**
- **Institut National de la Recherche Agronomique (INRA)**
  **75007 Paris (FR)**
- **Institut National Polytechnique de Toulouse (I.N.P.T)**
  **31029 Toulouse cedex 4 (FR)**

(72) Inventeurs:
- **MOULOUNGUI, Zéphirin**
  **F-31500 Toulouse (FR)**
- **MARECHAL, Philippe**
  **F-31400 Toulouse (FR)**
- **TRUONG DINH, Nguyen**
  **F-69440 St Laurent d'Agny (FR)**

(74) Mandataire: **Gaucherand, Michel et al**
**IXAS Conseil**
**15, rue Emile Zola**
**69002 Lyon (FR)**

(56) Documents cités:
**US-A- 3 689 462** **US-A- 3 896 090**
**US-A- 5 721 305**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 776 406 B1

## Description

### Domaine de l'invention

L'invention concerne une composition organique composée, au moins en partie, de polycarbonates de glycérol.

L'invention concerne le polycarbonate de glycérol extrait de la composition organique.

L'invention concerne aussi la composition organique comprenant des polycarbonates de glycérol, en mélange avec des polyglycérols, des copolymères [(α-hydroxyméthyl) oxyéthylène/(α-hydroxyméthyl) éthylène carbonate], éventuellement des copolymères [(α-alkyl) oxyéthylène/(α-alkyl) éthylène carbonate], éventuellement des copolymères [(α-alkyl) oxyéthylène/(α-hydroxyalkyl) oxyéthylène], du carbonate de glycérol et/ou d'autres carbonates organiques, du glycérol et/ou d'autres composés coproduits et/ou résiduels.

L'invention concerne également un procédé de production de la composition organique, par une polymérisation catalytique dans un milieu réactionnel hétérogène comportant une phase liquide organique formée d'au moins un composé donneur de fonctions hydroxyles et d' au moins un composé donneur de fonctions carbonates, une phase solide pouvant être ou non solubilisée, formée d'un catalyseur contenant des sites actifs au sens de Lewis ou de Bronsted et une phase gazeuse ambiante formée de gaz produits in situ.

L'invention concerne aussi un procédé d'extraction séparative de chaque constituant de la composition organique, et, en particulier, l'extraction du polycarbonate de glycérol, ou du polyglycérol ou des copolymères [(α-hydroxyméthyl) oxyéthylène/(α-hydroxyméthyl) éthylène carbonate] ou des copolymères [(α-alkyl) oxyéthylène/(α-alkyl) éthylène carbonate], ou des copolymères [(α-alkyl) oxyéthylène/(α-hydroxyalkyl) oxyéthylène].

L'invention concerne enfin l'utilisation et l'application à de nombreux domaines de la composition organique, ou de chacun de ses constituants extraits, en raison des nombreuses caractéristiques spécifiques telles que la multifonctionnalité tribologique, l'absence de toxicité, humaine et animale, et d'écotoxicité, la biodégradabilité, la stabilité thermique, la résistance à l'oxydation et à l'hydrolyse, un haut pouvoir mouillant, des propriétés rhéologiques, des conductivités électriques, leurs caractères hydrophiles et hydrosolubles...Sans être exhaustif, peuvent être cités les domaines tels que les lubrifiants et additifs lubrifiants automobiles et industriels plus particulièrement ceux destinés au travail des métaux ou à l'usinage, les fluides hydrauliques, plus particulièrement ceux résistants au feu, en tant que additifs, les agents de démoulage, les produits pour le traitement du bois, les additifs pour boue de forage, la détergence, les additifs mouillants, épaississants et dispersants, la pharmacie, la cosmétique, l'alimentaire ... et enfin comme intermédiaires de la synthèse chimique.

### Etat de la technique

Il est connu que le glycérol est un composé organique produit en grande quantité lors de transformations, à l'échelle industrielle, des huiles et des graisses en savons, en acides gras, en esters gras et en particulier, en esters méthyliques d'acides gras. Ce dernier est produit pour le développement des biocarburants.

Le glycérol apparaît, dès lors, comme une matière première disponible et intéressante pour son faible coût et ses qualités intrinsèques.

C'est pourquoi de nombreux travaux de recherche et de développement ont été entrepris axés sur l'exploitation du glycérol dans l'état ou préférentiellement dans un état chimiquement transformé.

L'une des voies expertisées et retenues pour cette transformation est celle de l'hétérocyclisation du glycérol qui permet de le transformer en carbonate de glycérol à plus forte valeur ajoutée en vue d'applications dans lesquelles le carbonate de glycérol s'est révélé exceller grâce aux excellentes caractéristiques intrinsèques qu'il offre. Le carbonate de glycérol est, en effet, un composé :

* bi-fonctionnel ce qui lui permet de jouer un rôle de solvant à l'égard de nombreux composés organiques ou minéraux,
* non toxique et à haut point d'ébullition,
* utilisable comme additif de stabilisation de polymères et d'intermédiaire de synthèse dans des réactions organiques telles que des estérifications, transestérifications, carbamoylation et autres réactions...
* qui peut être mis en oeuvre dans de nombreux domaines tels que la cosmétique, la pharmacie, l'alimentaire...

Plusieurs méthodes pour réaliser l'hétérocyclisation du glycérol par carbonatation sont proposées dans l'état de la technique, montrant tout l'intérêt que suscite cette hétérocyclisation.

Un premier document (US 2,915,529) décrit un procédé de synthèse de carbonate de glycérol, par réaction du glycérol avec un carbonate organique, tel que le carbonate d'éthylène ou le carbonate de propylène en catalyse homogène, en présence d'une base alcaline, à une température comprise entre 125°C et 135°C. Le milieu réactionnel donne au terme de la réaction un mélange formé de carbonate de glycérol, d'éthylèneglycol, de la base alcaline utilisée comme catalyseur, de glycérol et de carbonate d'éthylène. Mais l'extraction du carbonate de glycérol du mélange

réactionnel précité obtenu, crée un inconvénient majeur car cette extraction est de mise en oeuvre délicate : elle nécessite en effet une neutralisation acide puis une distillation sous vide en présence de glycérol contaminé par les produits résultants de la neutralisation. De plus, ce procédé développé à l'échelle industrielle présente un autre inconvénient qui est de mettre en oeuvre, comme source de carbonate pour la réaction, un réactif à coût élevé : les carbonates organiques. Enfin, ce procédé conduit exclusivement à la production de carbonate de glycérol.

Un autre document (EP 0739888) décrit un procédé de production de carbonate de glycérol à partir de glycérol et de carbonate organique cyclique, en faisant réagir ces composés dans un milieu solvant constitué par un carbonate organique ou un mélange de carbonates organiques, en présence d'un catalyseur solide comprenant une résine macroporeuse anionique bicarbonatée ou hydroxylée, ou une zéolithe de type X ou Y tridimensionnelle comportant des sites basiques, à une température d'au plus 110°C. Dans ce procédé, les carbonates d'éthylène et/ou de propylène sont de préférence utilisés comme carbonates réactifs de départ car ils conduisent à une cinétique de réaction plus élevée, et le coproduit de la réaction de carbonatation qui est un diol est soutiré du milieu réactionnel au fur et à mesure qu'il se forme.

Par la combinaison des moyens précités, en particulier, la conduite de la réaction dans un milieu solvant formé de carbonates organiques, contenant un catalyseur hétérogène et pratiquant un soutirage du diol formé, le procède conduit à l'obtention quasi-exclusive de carbonate de glycérol en concentration élevée, sans qu'il y ait apparition dans le milieu réactionnel de polycarbonates organiques.

Un autre document (FR 2,778,182) décrit un procédé de fabrication de carbonate de glycérol par réaction catalytique de carbamoylation/carbonatation du glycérol, qui consiste à faire réagir de l'urée et du glycérol à une température comprise entre 90°C et 220°C en présence d'un catalyseur, constitué par au moins un sel métallique contenant des sites acides de Lewis.

Cette réaction se produit selon le mécanisme suivant en deux étapes :

Urée + glycérol → carbamate de glycérol + ammoniac (1)

carbamate de glycérol → carbonate de glycérol + ammoniac (2)

La réaction, selon les deux étapes précitées, s'effectue préférentiellement sous vide, en particulier à une pression comprise entre $3.10^3$ Pascal et $2.10^4$ Pascal, afin de déplacer l'équilibre réactionnel en faveur de l'élimination de l'ammoniac gazeux généré.

Le catalyseur mis en oeuvre dans le procédé décrit, est choisi dans le groupe constitué par les sulfates métalliques, tels que le sulfate de zinc, le sulfate de manganèse, le sulfate de magnésium, le sulfate de nickel, le sulfate de fer, le sulfate de cobalt, le sulfate de sodium, présentant des sites acides de Lewis, porteurs de l'activité catalytique : ces sulfates métalliques sont mis en oeuvre seuls ou sous formes supportées.

Ainsi le procédé proposé pour produire du carbonate de glycérols par réaction catalytique de deux composés qui sont le glycérol et l'urée, est plus intéressant économiquement et dès lors a une application industrielle en raison des faibles coûts des matières premières utilisées. Mais le procédé est limité exclusivement à la production de carbonate de glycérol.

Ainsi l'état de la technique révèle déjà que l'on sait produire du carbonate de glycérol comme on a su produire d'autres carbonates organiques tels que le carbonate d'éthylène.

Toutefois, l'état de la technique révèle aussi que certains de ces carbonates organiques, tel qu'en particulier, le carbonate d'éthylène, ont pu être transformés en polycarbonates macromoléculaires, particulièrement intéressants dans de nombreux domaines d'applications chimiques.

Un document (FR 1,182,439) décrit effectivement un procédé de préparation de polycarbonates macromoléculaires à partir de carbonates cycliques (comme le carbonate d'éthylène) à groupes hydroxyles terminaux, de poids moléculaires compris entre 700 g/mol et 5000 g/mol et manifestant des indices d'hydroxyles allant de 20 à 170.

Le procédé proposé consiste à chauffer le carbonate d'éthylène avec un alcool polyhydrique à des températures comprises entre 150°C et 250°C en présence d'un catalyseur basique (carbonate de potassium) avec un dégagement de $CO_2$. Les polycarbonates d'éthylène, issus de ce procédé, ont des propriétés intéressante dues à la présence de leurs nombreux sites hydroxyles, sites qui leur permettent de réagir par exemple, avec des acides carboxyliques, en donnant des esters polycarboxyliques ou en donnant des composés utilisés en particulier dans des opérations de moulage, laminage, dans l'enduction des textiles. Ces polycarbonates peuvent également réagir avec des isocyanates en donnant des polyuréthanes utilisés dans la création de mousses de polyuréthanes flexibles ou rigides.

D'autres documents de l'état de la technique [Polymer letters édition vol. 14 PP 169-165 (1971) ou Makromol.

Chem 191, 465-472 (1990)] évoquent d'autres conditions d'obtention de polycarbonate d'éthylène (et de propylène dans le deuxième document), qui :

- dans le premier document, consistent en une polymérisation catalytique du carbonate d'éthylène hétérocyclique en présence d'un catalyseur adéquat tel que le Ti $(OBu)_4$
- dans le deuxième document, consistent à copolymériser du méthyloxirane avec du $CO_2$.

Toutefois ces documents proposent des moyens qui relèvent plus de travaux de laboratoire que de travaux destinés à un développement industriel.

L'état de la technique révèle enfin (US Pat 5,721,305) qu'il est possible de produire des polymères de glycérol à partir de glycérol, ou d'un composé tel que le 2,2 diméthyl - 1,3 - dioxolane - 4 - méthanol, de glycidol ou de carbonate de glycérol, la polymérisation s'effectuant en présence d'une argile anionique de type hydrotalcite. Dans le cas particulier de l'utilisation du carbonate de glycérol comme matière réaçtionnelle de départ, il est souhaité que le carbonate de glycérol soit préparé par réaction avec du glycérol et du carbonate de diéthyle. Les résultats d'analyse du mélange provenant de la polymérisation (exemple 5) montrent l'obtention d'oligomères linéaires ou cycliques de glycérol et des monocarbonate dimères, ou trimères ou tétramères de glycérol, alors que l'on aurait pu s'attendre à la présence également de polycarbonates de glycérol sous forme dimères, trimères ou tétramères, ce qui n'est pas le cas.

Il apparaît dès lors à travers ce dernier document que le carbonate de glycérol ne peut être utilisé comme matière réactionnelle dans un procédé de polymérisation en vue d'obtenir un polycarbonate de glycérol sous la forme d'oligomères par exemple.

Ainsi les procédés proposés dans l'état de la technique décrivent des moyens mis en oeuvre pour produire du carbonate de glycérol, mais ne livrent pas les moyens qui devraient être mis en oeuvre pour obtenir des polycarbonates de glycérol.

## Objectifs de l'invention

Dès lors, l'invention se propose :

- de créer un procédé de production catalytique de polycarbonate de glycérol, par une polymérisation catalytique
- de former une composition organique, comprenant au moins des polycarbonates de glycérol en mélange avec d'autres composés utiles,
- d'extraire de cette composition organique, les polycarbonates de glycérol et éventuellement d'autres composés utiles,
- de montrer leurs principales applications

## Sommaire de l'invention

L'invention concerne d'abord une composition organique présentant des caractéristiques de grande stabilité thermique, de résistance au feu, de multifonctionnalité tribologique, de biodégradabilité, de non-toxicité et d'écotoxicité, de résistance à l'oxydation et l'hydrolyse de haut pouvoir mouillant, d'excellentes propriétés rhéologiques et de conductivités électriques, qui se caractérise en ce qu'elle comprend au moins :

a) des polycarbonate de glycérol représentés par la formule générale :

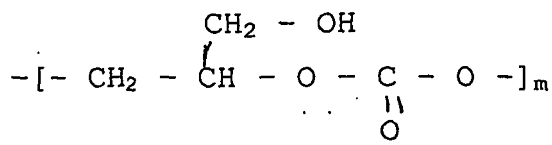

dans laquelle « m » est au moins égal à 2, prend une valeur comprise entre 2 et 100.

b) des polyglycérols répondant aux formules générales

$$-(-\ CH_2-\overset{OH}{\overset{|}{CH}}-CH_2-O-)-_n \quad \text{et/ou} \quad -(-\overset{CH_2\ OH}{\overset{|}{CH_2}}-CH-O-)-_p$$

dans laquelle « n » et « p » sont chacun au moins égal à 2, prennent chacun une valeur comprise entre 2 et 150.

c) des copolymères[(α-hydroxyméthyl) oxyéthylène (α-hydroxyméthyl) éthylène carbonate)] représentés par la formule générale :

$$-[-\ (CH_2-\overset{CH_2-OH}{\overset{|}{CH}}-O-)_x-(-\ CH_2-\overset{CH_2-OH}{\overset{|}{CH}}-O-\underset{\underset{O}{\|}}{C}-O-)_y-]-_q$$

dans laquelle « x » est au moins égal à 2 et prend une valeur comprise entre 2 et 100, « y » est au moins égal à 2 et prend une valeur comprise entre 2 et 100 et « q » est au moins égal à 2 et prend une valeur comprise entre 2 et 100.

d) éventuellement des copolymères [(α-alkyl) oxyéthylène/(α-alkyl) éthylène carbonate] représentés par la formule générale :

$$-[-\ (CH_2-\overset{R}{\overset{|}{CH}}-O-)_z-(-\ CH_2-\overset{R}{\overset{|}{CH}}-O-\underset{\underset{O}{\|}}{C}-O-)_w-]-_s$$

dans laquelle « z » est au moins égal à 2 et prend une valeur comprise entre 2 et 100, « w » est au moins égal à 2 et prend une valeur comprise entre 2 et 100 et « s » est au moins égal à 2 et prend une valeur comprise entre 2 et 100, tandis que R est H ou une chaîne hydrocarbonée en $C_1$ à $C_4$.

e) Eventuellement des copolymères [(α-alkyl) oxyéthylène/(α-hydroxyalkyl) oxyéthylène] représentés par la formule générale :

$$-[-\ (CH_2-\overset{R}{\overset{|}{CH}}-O-)_a/-(-\ CH_2-\overset{R'}{\overset{|}{CH}}-O-)_b-]-_u$$

dans laquelle « a » est au moins égal à 2 et prend une valeur comprise entre 2 et 100, « b » est au moins égal à 2 et prend une valeur comprise entre 2 et 100 et « u » est au moins égal à 2 et prend une valeur comprise entre 2 et 100, tandis que R est H ou une chaîne hydrocarbonée en $C_1$ à $C_4$ et R' est une chaîne hydrocarbonée hydroxylée en $C_1$ à $C_4$.

L'invention concerne ensuite les polycarbonates de glycérol homopolymères, en général, en tant que produits nouveaux, répondant à la formule générale :

$$-[-\ CH_2-\overset{CH_2-OH}{\overset{|}{CH}}-O-\underset{\underset{O}{\|}}{C}-O-]_m$$

dans laquelle « m » est au moins égal à 2, prend une valeur comprise entre 2 et 100, et concerne également, en particulier, les polycarbonates de glycérol extraits de la composition organique, par des moyens d'extraction adaptés connus.

L'invention concerne également chacun des copolymères en général, en tant que produits nouveaux, et chacun de ces copolymères, en particulier, qui peuvent être extraits de la composition organique par des moyens d'extraction adaptés connus, chacun de ces copolymères répondant à une formule propre de :

- les copolymères[(α-hydroxyméthyl) oxyéthylène (α-hydroxyméthyl) éthylène carbonate)] représentés par la formule générale :

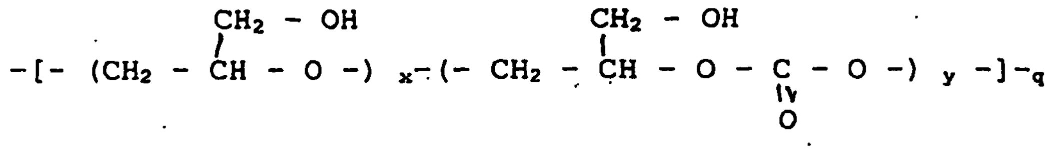

dans laquelle « x » est au moins égal à 2 et prend une valeur comprise entre 2 et 100, « y » est au moins égal à 2 et prend une valeur comprise entre 2 et 100 et « q » est au moins égal à 2 et prend une valeur comprise entre 2 et 100.

L'invention concerne enfin un procédé de production catalytique de la composition organique, comprenant au moins des polycarbonates de glycérol, en mélange avec d'autres composés utiles, en particulier des polyglycérols, des copolymères [(α-hydroxyméthyl) oxyéthylène/(α-hydroxyméthyl) éthylène carbonate], éventuellement des copolymères [(α-alkyl) oxyéthylène/(α-alkyl) éthylène carbonate], éventuellement des copolymères [(α-alkyl) oxyéthylène/(α-hydroxyalkyl) oxyéthylène], du carbonate de glycérol et/ou d'autres carbonates organiques, du glycérol et/ou d'autres composés coproduits et/ou résiduels, par une polymérisation catalytique dans un milieu réactionnel hétérogène comportant une phase organique liquide formée d'au moins un composé donneur de fonctions hydroxyles et d'au moins un composé donneur de fonctions carbonates, une phase solide pouvant être solubilisée, formée d'un catalyseur contenant des sites actifs au sens de Lewis et/ou de Bronsted et une phase gazeuse ambiante, le milieu réactionnel étant chauffé, qui se caractérise en ce que la polymérisation catalytique est conduite :

- dans une première étape, en portant le milieu réactionnel hétérogène à une température d'au plus 160°C, en soumettant le milieu réactionnel et la phase gazeuse ambiante à une pression au plus égale à $10^5$ Pascal, en contrôlant le flux des coproduits réactionnels gazeux ou liquides, tout au long de ladite étape,
- puis dans une deuxième étape, dès lors que se produit un début dé dégagement de $CO_2$, en portant le milieu réactionnel hétérogène à une température au moins égale à la température finale de la première étape, en soumettant la phase gazeuse contenant le $CO_2$ généré in situ à une pression au moins égale à $2{,}5.10^3$ Pascal et en contrôlant le dégagement gazeux naissant.

**Description détaillée de l'invention**

La composition organique selon l'invention se compose essentiellement de polycarbonate de glycérol, en mélange avec des polyglycérols, des copolymères [(α-hydroxyméthyl) oxyéthylène/(α-hydroxyméthyl éthylène carbonate)] et éventuellement des copolymères [(α-alkyl) oxyéthylène/(α-alkyl) éthylène carbonate] dans lesquels le radical alkyl est H ou une chaîne hydrocarbonée en $C_1$ à $C_4$, éventuellement des copolymères [(α-alkyl) oxyéthylène/(α-hydroxyalkyl) oxyéthylène] et/ou autres.

Toutefois, la composition peut contenir également du carbonate dé glycérol et/ou d'autres carbonates organiques et du glycérol quand ledit glycérol est le donneur de fonctions hydroxyles en particulier quand la quantité initiale du composé donneur de fonctions hydroxyles dans le milieu réactionnel est déséquilibrée par rapport à la quantité initiale du composé donneur de fonctions carbonates.

Plus précisément, la composition selon l'invention se caractérise par le fait qu'elle contient :

- de 5% en poids à 85% en poids de polycarbonate de glycérol
- de 15% en poids à 50% en poids de polyglycérol
- de 0,1% à 50% en poids de poly[(α-hydroxyméthyl) oxyéthylène/(α-hydroxyméthyl éthylène carbonate)]
- de 0% à 50% en poids de copolymères [(α-alkyl) oxyéthylène/(α-alkyl) éthylène carbonate]
- de 0% à 50% en poids de copolymères [(α-alkyl) oxyéthylène/(α-hydroxyalkyl) oxyéthylène],

- qu'elle peut contenir également :
- de 0,1% en poids à 60% en poids de carbonate de glycérol et/ou d'autres carbonates organiques,
- de 5% en poids à 50% en poids de glycérol.
- de 1% en poids à 5% en poids d'un mélange de carbonates organiques autres que le carbonate de glycérol et des alcools coproduits de réactions.

La composition organique selon l'invention se caractérise également par le fait que le rapport polycarbonate de glycérol/polyglycérol est compris entre 0,25 et 6.

Bien que la composition selon l'invention puisse déjà être caractérisée par la détection des divers composants la formant, il est aussi possible de la caractériser par d'autres caractéristiques résultant d'analyses pratiquées dans le domaines des polymères liquides.

Ainsi :

- L'analyse chromatographique par perméation de gel (GPC) de la composition selon l'invention montre une augmentation de la masse moléculaire moyenne par rapport à une composition témoin équivalente formée de carbonate de glycérol, révélant que ladite composition contient bien des polymères de carbonate de glycérol.

- La méthode par « Chromatographie Liquide à Haute Pression » (HPLC) qui consiste à injecter la composition selon l'invention dans un fluide liquide, appelé « phase mobile » (solution d'acide sulfurique dilué) et à lui faire parcourir une colonne de chromatographie remplie de granulés constituant une « phase stationnaire ». Cette phase stationnaire permet une séparation des constituants présents dans la composition selon l'invention selon leur polarité et selon leurs caractéristiques stériques (c'est-à-dire selon leur degré de polymérisation). Les constituants de la composition selon l'invention sont inégalement retenus dans la colonne et sont élués les uns après les autres de ladite colonne. Les constituants élués séparément sont détectés par réfractométrie, en provoquant l'enregistrement d'un pic pour chaque constituant permettant une analyse qualitative et quantitative de la composition selon l'invention (figure 1 et figure 2).

- Une spectrométrie de masse, à bombardement par des atomes rapides, connue sous l'appellation « MS Fast Atom Bombardment (MS-FAB) » qui consiste à soumettre un échantillon à analyser mis en solution dans un solvant organique visqueux (glycérol, thioglycérol), à un bombardement par des atomes rapides (du type xenon, argon) dans un spectromètre de masse, ces atomes pouvant avoir une énergie de l'ordre de 8 KeV, ce bombardement provoquant la formation d'ions. Les ions formés sont accélérés par une différence de potentiel puis analysés après avoir été déviés en fonction du rapport masse/charge (m/z) et caractérisés. De manière plus directe, la spectrométrie de masse FAB permet de caractériser les différents polymères soumis à analyse : le poids moléculaire moyen de chaque polymère de la composition organique selon l'invention déterminé par la méthode SM-FAB apparaît compris entre 100 et 10 000 (figure 3).

- Le spectre infrarouge de la composition selon l'invention révèle l'apparition d'une bande à la fréquence 1735 $cm^{-1}$ typique de la fonction carbonate alinéaire et la diminution d'intensité de la bande de fréquence 1403 $cm^{-1}$, typique de la présence de la fonction -CH2-OH par rapport à une composition témoin équivalente formée de carbonate de glycérol cyclique. L'apparition d'une bande de fréquence de forte intensité à 1100 $cm^{-1}$ révèle la présence des liaisons « éther » -C-O-C- caractéristiques des polyéthers. L'apparition de la bande de fréquence 1735 $cm^{-1}$ propre au carbonate linéaire révèle la présence de carbonate de glycérol linéaire et la diminution de l'intensité de la bande de fréquence 1403 $cm^{-1}$ montre l'augmentation de la longueur de chaîne au niveau du groupement hydroxyméthyl latéral (figure 4).

- Le taux d'hydroxyle mesuré dans la composition selon l'invention est compris entre 200 et 1200 milligrammes de KOH par gramme d'échantillon et préférentiellement entre 650 et 1000 (Norme NFT 60/213).

- La viscosité de la composition selon l'invention peut être comprise entre 50 et 50 000 centistok à 40°C (cSt), alors que la viscosité d'une composition témoin équivalente formée de carbonate de glycérol est d'environ de 25 cSt à 40°C (selon la norme ASTM n° D445).

La composition selon l'invention peut être utilisée, dans l'état pour de nombreuses applications ou bien être soumise à une extraction sélective de l'un au moins de ses constituants.

Dans le cas où la composition selon l'invention est mise en oeuvre dans l'état, elle peut devoir être soumise à séparation de deux phases, l'une liquide et l'autre solide, la phase solide étant constituée par le catalyseur utilisé lors de la réaction de polymérisation entre les composants formant le milieu réactionnel initial.

Une telle séparation peut être réalisée par un moyen connu, par exemple, une filtration, une centrifugation, une décantation ou autres méthodes de séparation.

Après cette séparation, la composition organique peut être mise en oeuvre dans les nombreuses applications auxquelles ses qualités intrinsèques la destinent.

Parmi les qualités intrinsèques les plus importantes, peuvent être citées la multifonctionnalité de la composition, son absence de toxicité et d'écotoxicité, sa biodégradabilité, ses qualités tribologiques, sa stabilité thermique et sa résistance à l'oxydation et à l'hydrolyse, son haut pouvoir mouillant, ses propriétés rhéologiques, électriques, ses qualités hydrophiles qui la rendent hydrosoluble et d'autres encore.

Dès lors, les applications possibles dans lesquelles peut intervenir la composition selon l'invention sont diverses et multiples.

Parmi les applications possibles, peuvent être citées, à titre illustratif, celles relatives aux domaines techniques tels que :

- les fluides hydrauliques,
- la lubrification,
- le traitement et la décoration du bois,
- l'ignifugation,
- la biodégradabilité,
- la détergence,
- l'exploration et la production pétrolière,
- le traitement des eaux,
- la cosmétique,
- la pharmacie,
- l'alimentaire,
- les intermédiaires de la chimie et en particulier les intermédiaires de la chimie des polymères....
- et de nombreux autres domaines.

Dans le cas où la composition selon l'invention ne peut être souhaitablement mise en oeuvre dans l'état, car il apparaît nécessaire de disposer de l'un des composés formés, une extraction sélective du composé souhaité est pratiquée par une méthode séparative connue de l'état de la technique.

Des méthodes séparatives connues peuvent être indiquées qui sont par exemple :

- une séparation par chromatographie préparative sur gel perméable (méthode GPC) qui consiste à séparer les polymères par effet de taille des macromolécules en solution dans un solvant approprié. Tous les polymères et copolymères à extraire de la composition à savoir les polycarbonates de glycérol, les polyglycérols et les copolymères précités ayant des poids moléculaires différents et des solubilités différentes, une telle méthode séparative est appliquée avec succès à l'extraction de chaque polymère et copolymère présents dans la composition.

- une extraction par un mélange liquide/liquide qui consiste à mélanger la composition organique contenant les polymères et copolymères à extraire avec des liquides non miscibles à l'égard de ladite composition, puis à conduire un enrichissement progressif de chaque liquide d'extraction en polymères et copolymères à extraire et à analyser les polymères et copolymères présents dans chaque liquide d'extraction non miscibles à la composition. Par cette méthode d'extraction liquide/liquide, il est possible d'extraire, par enrichissement progressif, les différents polymères, copolymères et autres composés utiles de la composition selon l'invention. Cette séparation par mélange liquide/liquide se fait préférentiellement au moyen de solvants tels que par exemple l'acétone, l'acétonitrile, le tétrahydrofurane, l'éther éthylique.

- une distillation classique ou une distillation moléculaire ou à « court chemin » qui consiste à réaliser une séparation des constituants présents dans la composition selon l'invention, par leur point d'ébullition propre, la distillation moléculaire se distinguant de la distillation classique par le fait que la distance entre l'organe chauffant qui porte à ébullition chaque constituant et l'organe de refroidissement qui condense et recueille chaque constituant est égale au libre parcours moyen de chaque constituant à l'état gazeux. Comme la compositions selon l'invention est formée de polycarbonates de glycérol, de polyglycérols et de copolymères [(α-hydroxyméthyl) oxyéthylène/(α-hydroxyméthyl) éthylène carbonate], éventuellement des copolymères [(α-alkyl) oxyéthylène/(α-alkyl) éthylène carbonate], éventuellement des copolymère [(a -alkyl) oxyéthylène/(α hydroxyalkyl) oxyéthylène] et peut contenir aussi du carbonate de glycérol, des carbonates organiques autres tels que le carbonate d'éthylène, le carbonate de propylène, du glycérol, des alcools autres dont les points d'ébullition sont différents, cette méthode de séparation est particulièrement adaptée pour permettre la séparation de chaque constituant.

- la méthode SMB connue sous la dénomination (« Simulated Moving Bead ») qui consiste en une séparation en continu par chromatographie sur résine d'un mélange en solution dans un éluant en simulant un mouvement de la résine à contre-courant de l'éluant. Selon cette méthode, plusieurs colonnes contenant une résine échangeuse d'ions adaptée aux composés à séparer sont montées en série et sont alimentées en continu par la composition selon l'invention par la colonne de tête, les dernières colonnes étant munies de sorties d'élution assurant l'extraction sélective de chaque composé de la composition organique introduite en alimentation. Cette composition organique d'alimentation qui est un mélange intime de composés différents est soumise à séparation sélective par le fait que chaque composé est retenu de façon différente par la résine, selon leur coefficient d'affinité propre. Ainsi, chaque composé retenu sélectivement par la résine est séparé sélectivement des autres composés par un éluant adapté et extrait sélectivement de la composition organique selon l'invention.

Dès lors, par l'une ou l'autre de ces méthodes connues peuvent être isolés puis extraits les polymères et copolymères présents dans la composition organique selon l'invention:

- les polycarbonates de glycérol
- les polyglycérols
- les copolymères [(α-hydroxyméthyl) oxyéthylène/(α-hydroxyméthyl) éthylène carbonate)] et les copolymères [(α-alkyl) oxyéthylène/(α-alkyl) éthylène carbonate] et les copolymères [(α -alkyl) oxyéthylène/ (α -hydroxyalkyl) oxyéthylène].

Les polymères et copolymères issus de la composition selon l'invention sont de structures majoritairement linéaires. Toutefois, il est possible de trouver dans ladite composition des polymères et copolymères ramifiés, voire cycliques dans.le cas de la présence d'oligomères ou encore dont les terminaisons des chaînes polymères sont cycliques.

L'invention concerne également un procédé de production catalytique de la composition organique, comprenant au moins des polycarbonates de glycérol, en mélange avec d'autres composés utiles, en particulier, des polyglycérols, des copolymères [(α-hydroxyméthyl) oxyéthylène/(α-hydroxyméthyl éthylène carbonate)], éventuellement des copolymères [(α-alkyl) oxyéthylène/(α-alkyl) éthylène carbonate], du carbonate de glycérol et/ou d'autres carbonates organiques, du glycérol et/ou d'autres composés coproduits, des glycérols et/ou d'autres alcools.

Le procédé de production de la composition organique selon l'invention, par une polymérisation catalytique, dans un milieu réactionnel hétérogène comportant une phase organique liquide formée d'au moins un composé donneur de fonctions hydroxyles et d'au moins un composé donneur de fonctions carbonates réagissant entre eux, une phase solide pouvant être solubilisée, formée d'un catalyseur contenant des sites actifs au sens de Lewis et/ou de Bronsted et une phase gazeuse ambiante, le milieu réactionnel étant chauffé, se caractérise en ce que la réaction catalytique de polymérisation est conduite selon deux étapes qui s'enchaînent, dont:

* la première étape consiste en une réaction catalytique, le milieu réactionnel hétérogène étant porté à une température au plus égale à 160°C, en soumettant le milieu réactionnel et la phase gazeuse ambiante à une pression au plus égale à $10^5$ Pascal et en contrôlant le dégagement gazeux ou en soutirant les coproduits réactionnels liquides tout au long de ladite étape,

* la deuxième étape, dès lors que se produit un début de dégagement de $CO_2$ naissant, consiste en une réaction catalytique conduite à une température au moins égale à la température finale de la première étape en soumettant la phase gazeuse contenant du gaz $CO_2$ généré in situ à une pression au moins égale à $2{,}5.10^3$ Pascal et en contrôlant le dégagement gazeux $CO_2$ généré in situ tout au long de ladite étape.

Selon le procédé de l'invention, les quantités de composés donneurs de fonctions hydroxyles et de composés donneurs de fonctions carbonates introduites dans le milieu réactionnel sont de l'ordre de 0,65 à 2,00 moles et préférentiellement 0,80 à 1,20 moles de composés donneurs de fonctions carbonates pour une mole de composés donneurs de fonctions hydroxyles, l'excès de donneurs de fonctions hydroxyles facilitant l'amorçage et le déroulement de la réaction de polymérisation recherchée.

Les composés donneurs de fonctions hydroxyles intervenant dans le procédé de l'invention sont choisis dans le groupe constitué par le glycérol, le glycidol, l'éthylène glycol, les propanes diols, le 2,2 diméthyl 1,3 dioxolane 4 méthanol, pris seuls ou en mélange.

Les composés donneurs de fonctions carbonates intervenant dans le procédé de l'invention sont choisis dans le groupe constitué par l'urée, les carbonates d'alkylène et en particulier le carbonate d'éthylène, le carbonate de propylène, le carbonate de butylène, les carbonates de dialkyle, en particulier le carbonate de diéthyle, le carbonate de diméthyle.

La réaction catalytique de polymérisation selon l'invention peut s'initier à travers une réaction initiale de carbonatation qui peut se produire, dans le cadre de la première étape du procédé par : une carbonatation directe ou une transcarbonatation .

Dans le cas où la réaction catalytique de polymérisation selon l'invention s'initie à travers une carbonatation directe, le composé donneur de fonctions hydroxyles est préférentiellement le glycérol et le composé donneur de fonctions carbonates est préférentiellement de l'urée.

Lors d'une telle carbonatation directe, il se produit un dégagement gazeux d'ammoniac qui est contrôlé tout au long de la première étape du procédé.

Dans le cas où la réaction catalytique de polymérisation selon l'invention s'initie à travers une transcarbonatation,

- le composé donneur de fonctions hydroxyles est choisi dans le groupe constitué par le glycérol, le glycidol, l'éthylène glycol, les propanes dols, le 2-2 diméthyle 1,3 dioxolane 4 méthanol, pris seuls ou en mélange.

- Le composé donneur de fonctions carbonates est choisi dans le groupe constitué par les carbonates d'alkylène cyclique dont en particulier, les carbonates d'éthylène, le carbonate de propylène, le carbonate de butylène et/ou les carbonates de dialkyle, dont en particulier le carbonate de diéthyle et le carbonate de diméthyle.

Lors d'une telle transcarbonatation, un coproduit de la transcarbonatation initiale apparaît dans la phase liquide réactionnelle, qui est un alcool ou un mélange d'alcools, qui sont, éventuellement, à éliminer au fur et à mesure de leur production.

Le catalyseur intervenant dans la réaction catalytique de polymérisation entre le composé donneur de fonctions carbonates et le glycérol peut être choisi parmi les sels métalliques que sont les sulfates, les phosphates, les nitrates métalliques, mais plus particulièrement les sulfates métalliques tels que : le sulfate de zinc, le sulfate de manganèse, le sulfate de magnésium, le sulfate de nickel, le sulfate de fer, le sulfate de cobalt, le sulfate de sodium. Ces sulfates solides présentent des sites d'acides de Lewis, nombreux et de force élevée, sites qui sont responsables de l'activité catalytique. Ce type de catalyseur manifeste une propension à se dissoudre dans le milieu réactionnel au moins au cours de la première étape du procédé selon l'invention et à précipiter au terme de cette première étape, sous une forme cristalline, marquant une très forte évolution de sa structure initiale, puisque la surface spécifique peut connaître après cette précipitation une augmentation de l'ordre de 300 fois par rapport à la surface spécifique du catalyseur avant dissolution.

Le catalyseur peut également être choisi parmi les oxydes métalliques simples, en particulier, dans le groupe constitué par l'oxyde de zinc, l'oxyde de magnésium, l'oxyde d'étain, l'oxyde de nickel, l'oxyde de fer, l'oxyde de cobalt, l'oxyde de manganèse ou parmi les oxydes métalliques doubles, en particulier, dans le groupe constitué par l'oxyde d'étain et sodium, l'oxyde de zinc et de sodium, l'oxyde de magnésium et de sodium.

Le catalyseur peut également être choisi parmi les argiles de la famille des attapulgites ou zéolithes répondant à la formule générale :

$$Si_{8M}g_5O_{20}(OH)_2(OHH^+)_4,\ 4H_2O$$

dans laquelle le magnésium peut être remplacé en tout ou partie par de l'aluminium. Ces argiles sont des complexes d'oxydes métalliques et de ce fait sont des bases métalliques.

Le catalyseur peut aussi être choisi dans le groupe constitué par les résines échangeuses d'ions tels que les résines cationiques sur lesquelles sont fixés des métaux, en particulier, le zinc ($Zn^{2+}$), le magnésium ($Mg^{2+}$), l'étain ($Sn^{2+}$) ou les résines macroporeuses anioniques, hydroxylées ou bicarbonatées, par exemple, « l'Amberlyst A26 » (R) qui est sous une forme hydroxylée $OH^-$ et qui est fonctionnalisée sous la forme $H\ CO_3^-$ et mise en oeuvre sous une forme bicarbonatée (EP 0739888).

Le catalyseur peut aussi être choisi parmi les composés organométalliques, préférentiellement parmi les composés organomagnésiens, organozinciques, organostaniques.

Le catalyseur peut aussi être choisi dans le groupe constitué par des composés chimiques, solubles dans le milieu réactionnel tels que l'hydroxyde de sodium, l'hydroxyde de potassium, les amines supportées, les alcoolates métalliques en particulier le méthylate ou l'éthylate de sodium.

Le catalyseur selon l'invention est introduit dans le milieu réactionnel à raison de 0,01% en poids à 5 % en poids par rapport au composé donneur de fonctions hydroxyles introduit dans le milieu réactionnel.

La pression appliquée au milieu réactionnel et contrôlée au cours de la première étape est au plus de $10^5$ Pascal, mais elle peut être préférentiellement inférieure à cette valeur maximale afin de déplacer l'équilibre réactionnel entre le composé donneurs de fonctions carbonates et le composé donneur de fonctions hydroxyles dans le sens de l'élimination de la phase gazeuse qui peut se former in situ. De préférence, la pression appliquée au milieu réactionnel au cours de la première étape est comprise entre $2.10^2$ et $5.10^4$ Pascal.

La température à laquelle est porté le milieu réactionnel au cours de la deuxième étape est au moins égale à la température finale de la première étape et préférentiellement choisie dans l'intervalle compris entre 180°C et 220°C.

Quant à la pression appliquée au milieu réactionnel au cours de la deuxième étape, elle est comprise préférentiellement entre 2,5 $10^3$ et 2,5 $10^6$ Pascal afin de déplacer l'équilibre réactionnel de la polymérisation dans lé sens de la formation du polycarbonate de glycérol en contrôlant et en limitant la formation in situ de la phase gazeuse $CO_2$ par décomposition.

Dans le cas où le composé générateur de fonctions hydroxyles est le glycérol et le composé générateur de fonctions carbonates est l'urée, les effluents gazeux très réactifs que sont l'ammoniac naissant et l'anhydride carbonique naissant dégagés peuvent être utilisés à des fins de création de l'urée, matières premières utilisées dans le milieu réactionnel selon les méthodes connues.

Que ce soit la composition organique, ou l'un ou l'autre des polymères ou copolymères issus de cette composition, les domaines de leurs applications sont nombreux et importants.

Les domaines sont, en particulier, pour les plus importants, et à titre illustratif, ceux des lubrifiants automobiles et industriels plus particulièrement ceux destinés au travail des métaux où à l'usinage, des fluides hydrauliques plus particulièrement ceux résistants au feu, des agents de démoulage, des produits pour traitement du bois, des additifs pour les boues de forage, de la détergence, des additifs mouillants et épaississants, de la pharmacie, de la cosmétique, de l'alimentaire, des intermédiaires de la synthèse chimique ou autres.

Ces nombreuses et importantes applications résultent des nombreuses caractéristiques spécifiques développées par cette composition organique et/ou l'un ou l'autre des polymères ou copolymères issus de cette composition, telles que la multifonctionnalité tribologique, l'absence de toxicité, humaine et animale et d'écotoxicité, la biodégradabilité, la stabilité thermique, la résistance à l'oxydation et à l'hydrolyse, un haut pouvoir mouillant, des propriétés rhéologiques, électriques, leurs caractères hydrophiles et hydrosolubles et autres.

Les exemples ci-après illustrent l'objet de l'invention, pour mieux la comprendre mais sans en limiter la portée.

**Exemples :** production d'une composition organique selon l'invention contenant du polycarbonate de glycérol, du polyglycérol, du carbonate de glycérol et du glycérol.

On a préparé un milieu réactionnel M contenant un composé donneur de fonctions hydroxyles et un composé donneur de fonctions carbonates en vue de produire la composition organique selon l'invention, contenant au moins pour partie des polycarbonates de glycérol.

**<u>Exemples 1 à 7</u> :** (figures 1 à 5)

L'exemple 1 est un exemple témoin auquel font référence comparative les exemples 2 à 6 qui illustrent l'objet de l'invention.

Les exemples 2 à 6 illustrent la polymérisation catalytique par carbonatation directe selon l'invention.

Dans le cas d'une polymérisation catalytique s'initiant par une réaction de carbonatation directe, on a introduit dans un réacteur clos 120 g de glycérol et 82 g d'urée, et 2,6 g de catalyseur (sulfate de zinc mono-hydraté) créant le milieu réactionnel M.

Ce milieu réactionnel, placé sous agitation, est chauffé au cours de la première étape pendant un temps t1 à une température de consigne T1 en maintenant dans ledit milieu réactionnel à une pression de consigne P1 d'au plus $10^5$ Pascal. De l'ammoniac naissant se forme in situ et la composition du flux gazeux est contrôlée tout en étant maintenue sous la pression P1 d'au plus $10^5$ Pascal. Dès lors que le dégagement d'ammoniac s'estompe dans le flux gazeux contrôlé in situ, la deuxième étape est engagée en portant la température de consigne du milieu T1 à T2 pendant un temps t2, la pression de consigne P2 du milieu réactionnel étant placée et maintenue à une pression choisie dans l'intervalle $2,5.10^3$ Pascal à $2,5.10^6$ Pascal. Le milieu gazeux généré in situ est composé pour l'essentiel de $CO_2$ naissant, dont la quantité formée est importante au début de la deuxième étape. Le flux gazeux formé a propension à diminuer jusqu'à devenir faible, voire inexistant à la fin de cette deuxième étape, la quantité de $CO_2$ produite in situ ayant tendance à tendre asymptomatiquement vers 0.

Le milieu réactionnel est alors recueilli puis analysé.

Toutes les conditions opératoires des exemples 1 à 6 sont réunies dans le tableau 1, tandis que l'analyse quantitative du milieu réactionnel final constituant la composition selon l'invention, et les déterminations de la masse molaire moyenne de la viscosité et du taux d'hydroxyle de ces mêmes exemples sont réunis dans le tableau 2.

Le milieu réactionnel de la première étape et de la deuxième étape de chaque exemple 1 à 6 selon l'invention, a été analysé par chromatographie liquide à haute pression (HPLC). A titre illustratif, l'analyse du milieu réactionnel des deux étapes de l'exemple 2 est décrite ci-après :

- Un prélèvement du milieu réactionnel de la première étape du procédé selon l'invention a été injecté dans une

solution d'acide sulfurique diluée. Cette solution acide chargée du milieu réactionnel, a parcouru une colonne de chromatographie remplie de granulé pour séparer les divers constituants du milieu réactionnel selon leur polarité et leurs caractéristiques stériques (poids moléculaires).

- Les constituants retenus dans des zones particulières de la colonne ont été élués sélectivement et ont été soumis à une détection par réfractométrie en provoquant l'enregistrement d'un pic pour chaque constituant présent. Le chromatogramme de cette première étape est donné dans la figure 1.

- Un prélèvement du milieu réactionnel de la deuxième étape du procédé selon l'invention a suivi le même processus en chromatographie. Les constituants retenus dans les zones particulière de la colonne ont été élués et soumis à une détection par réfractométrie en provoquant l'enregistrement d'un pic pour chaque constituant présent. Le chromatogramme de cette deuxième étape est donné dans la figure 2.

- La méthode d'analyse HPLC est mise en oeuvre pour la première fois, pour déceler et quantifier ces nouveaux produits et, dès lors, n'a pas de référence comparative existante.

- La comparaison des deux chromatogrammes HPLC révèlent l'apparition des polymères et copolymères de carbonates de glycérol au cours de la polymérisation catalytique selon l'invention (chromatogramme figure 2 par rapport chromatogramme figure 1).

- L'analyse comparative révèle une diminution importante de la quantité des composés initialement présent dans le milieu réactionnel et l'apparition de nouveaux composés que sont en particulier les polymères et copolymères de carbonate de glycérol.

L'exemple 7 illustre la polymérisation catalytique par transcarbonatation selon l'invention.

Dans le cas d'une polymérisation catalytique s'initiant par une réaction de transcarbonatation, on a introduit dans le même réacteur clos, 11 g de glycérol, 24 g de carbonate d'éthylène et 1 g de zéolithe comme catalyseur réactionnel.

Selon la première étape, ce milieu réactionnel, placé sous agitation, est chauffé au cours de la première étape pendant un temps t1 (60 min). à une température de consigne T1 (140°C) en maintenant ledit milieu réactionnel à une pression de consigne P1 d'au plus $10^5$ Pascal.

Selon la deuxième étape, dès lors que se produit un début de dégagement de $CO_2$ le milieu réactionnel est placé sous une pression de consigne P2 de 3. $10^3$ Pascal, et sa température est portée à la température de consigne T2 (180°C) pendant un temps t2 de 180 minutes.

Les divers composés présents dans le milieu réactionnel recueilli, sont déterminés par une analyse au moyen de la méthode HPLC. Cette analyse révèle une diminution de la quantité des composés initialement présents dans le milieu réactionnel et l'apparition de nouveaux composés.

La formation de ces composés est confirmée par le dégagement de $CO_2$ gazeux naissant mesuré par une solution d'hydroxyde de barium.

Les masses moléculaires moyennes des composés sont déterminées par chromatographie par perméation de gel (GPC), méthode qui révèle une augmentation de la masse moléculaire, moyenne du milieu réactionnel, prouvant que la réaction est bien de polymérisation, mesuré par bullage dans une solution d'hydroxyde de barium saturé.

Les viscosités exprimées en centistoke (cSt) sont mesurées à l'aide d'un viscosimètre Canon- Fenske, à 40°C (norme NFT 60-100, NFT 60-136 et ASTM D 445-96).

Le taux d'hydroxyle est déterminé selon la norme NFT 60-213 et exprime les liaisons -OH disponibles.

Toutes les conditions opératoires de l'exemple 7 sont réunies dans le tableau 1, tandis que l'analyse quantitative du milieu réactionnel final constituant la composition selon l'invention, et les déterminations dé la masse molaire moyenne de la viscosité et du taux d'hydroxyle de ces mêmes exemples sont réunis dans le tableau 2.

**Tableau 1 : Conditions opératoires du procédé**

| | Exemple 1 Témoin | Exemple 2 | Exemple 3 | Exemple 4 | Exemple 5 | exemple 6. | Exemple 7 |
|---|---|---|---|---|---|---|---|
| Composé donneur : - de fonctions hydroxyle - de fonctions carbonate Catalyseur | - 120 g de glycérol - 82 g d'urée - 2,6 g de $ZnSO_4$, $H_2O$ | - 120 g de glycérol - 82 g d'urée - 2,6 g de $ZnSO_4$, $H_2O$ | - 120 g de glycérol - 82 g d'urée - 2,6 g de $ZnSO_4$, $H_2O$ | - 120 g de glycérol - 82 g d'urée - 2,6 g de $ZnSO_4$, $H_2O$ | - 120 g de glycérol - 82 g d'urée 2,6 g de $Na_2SO_4$ | - 120 g de glycérol - 80 g d'urée 2,6 g de Mg $SO_4$ | - 11 g de glycérol 24 g de carbonate d'éthylène 1 g de zéolithe |
| 1ère étape température T1 Temps t1 pression P1 | 145°C 360 min $4.10^3$ Pascal | 140°C 360 min $4.10^3$ Pascal | 140°C 360 min $4.10^3$ Pascal | 140°C 360 min $4.10^3$ Pascal | 140°C 480 min $6.10^3$ Pascal | 150°C 480 min $6.10^3$ Pascal | 140°C 60 min $10^5$ Pascal |
| 2[e] étape température T2 Temps t2 pression P2 | 160°C 150 min (à 160°C) $10^5$ Pascal | 180°C 150 min (à 180°C) $10^5$ Pascal | 200°C 150 min (à 200°C) $10^5$ Pascal | 220°C 150 min (à 220°C) $10^5$ Pascal | 180°C 150 min (à 180°C) $10^5$ Pascal | 180°C 150 min (à 180°C) $10^5$ Pascal | 180°C 180 min (à 180°C) $3.10^3$ Pascal |

**Tableau 2 :** (figures 1 à 5)

| | Exemple 1 Témoin | Exemple 2 | Exemple 3 | Exemple 4 | Exemple 5 | Exemple 6 | Exemple 7 |
|---|---|---|---|---|---|---|---|
| Analyse du milieu PCG (1) réactionnel final : PG (2) composition copo (c) (3) Copo (d) (4) Copo (e) (5) | 2% 2% mis en évidence mais non quantifié | 18% 21% mis en évidence mais non quantifié | 18% 60% mis en évidence mais non quantifié | 8% 75% mis en évidence mais non quantifié | 23% 27% mis en évidence mais non quantifié | 14% 26% mis en évidence mais non quantifié | 8% 6 % mis en évidence et quantifié : 70% |
| % en poids cumulé des homopolymères et copolymères du milieu réactionnel final | 6% | 44% | 80% | 83% | 54% | 44% | 84% |
| Coproduits et résidus réactionnels (6) | 94% | 56% | 20% | 17% | 46% | 56% | 16% |
| Masse molaire moyenne du milieu réactionnel final en g/mol | 230 | 300 | 490 | 570 | 330 | 340 | |

(suite)

| | Exemple 1 Témoin | Exemple 2 | Exemple 3 | Exemple 4 | Exemple 5 | Exemple 6 | Exemple 7 |
|---|---|---|---|---|---|---|---|
| Viscosité cSt Centistoke à 40°C | 80 | 200 | 5000 | 15000 | 5600 | Non déterminé | 270 |
| Milligramme de KOH par gramme d'échantillon | 72 | 252 | 290 | 306 | 342 | 342 | 342 |
| (1) Polycarbonate de glycérol<br>(2) Polyglycérol<br>(3) Copo (3), (4) et (5) mis en évidence mais non quantifiés<br>(6) Coproduits et résidus réactionnels : carbonate de glycérol, glycols ...), carbonate d'éthylène, glycérol. | | | | | | | |

**Exemples 8 à 11 :** Extraction liquide/liquide du polycarbonate de glycérol, du polyglycérol, du carbonate de glycérol, et de glycérol au moyen de quatre solvants.

Pour ce faire, on a utilisé 18 g de la composition organique résultant de l'exemple 5 qui ont été placé dans une ampoule à décanter, en présence des solvants ci-après énoncés.
Exemple 8 : l'acétone
Exemple 9 : l'acétonitrile
Exemple 10 : l'éther éthylique
Exemple 11 : le tétrahydrofurane
Les résultats de l'extraction par ces 4 solvants sont rassemblés dans le tableau 3.

**Tableau 3 : Extraction liquide/liquide**

| Exemple | | 8 | | 9 | | 10 | | 11 | |
|---|---|---|---|---|---|---|---|---|---|
| | | Acétone | | Acétonitrile | | Ether éthylique | | Tétrahydrofurane | |
| | | Enrichi | Appauvrie | enrichi | appauvri | appauvri | enrichi | enrichi | appauvri |
| CG (1) | 29 | 39 | 25 | 40 | 9 | 81 | 28 | 38 | 25 |
| PCG (2) | 18 | 21 | 17 | 22 | 12 | 1 | 17 | 20 | 18 |
| G (3) | 16 | 15 | 16 | 14 | 22 | 13 | 16 | 15 | 15 |
| PG (4) | 34 | 25 | 37 | 23 | 47 | 6 | 35 | 28 | 37 |
| (1) carbonate de glycérol<br>(2) polycarbonate de glycérol<br>(3) glycérol<br>(4) polyglycérol | | | | | | | | | |

Il peut être constaté un enrichissement de la phase solvant (hormis l'exemple 10) en polycarbonate de glycérol et en carbonate de glycérol, alors qu'il se produit un appauvrissement de cette même phase du glycérol et polyglycérol.

Le phénomène inverse se produit dans la phase non-solvant.

Par le jeu d'extraction successives, il est possible d'enrichir l'un des solvants en l'un au moins des composés et en particulier en polycarbonate de glycérol pour les exemples 8, 9 et 11.

Dans le cas de l'exemple 10, il peut être constaté une tendance à l'enrichissement en petites molécules, c'est-à-dire les monomères tels que le carbonate de glycérol et le glycérol et un appauvrissement en grandes molécules telles que le polycarbonate de glycérol et le polyglycérol. L'éther éthylique permet dès lors d'isoler grâce à au moins un deuxième passage le polycarbonate de glycérol du polyglycérol.

Enfin, il peut également être constaté que l'enrichissement se fait par affinité entre molécules de même famille tel que les polycarbonates et le carbonate de glycérol et versus en ce qui concerne le polyglycérol et le glycérol.

**Exemple 12 :** Cet exemple concerne la détermination des masses molaires par une méthode de spectrométrie de masse (méthode MS-FAB selon la figure 3).

La composition organique issue de l'exemple 5 a été soumise à une spectrométrie de masse, qui a permis de caractériser des structures des polycarbonates de glycérol sous forme d'oligomères, du polyglycérol, également sous une forme oligomère et du copolymère [(α-hydroxyméthyl) oxyéthylène/ (α-hydroxyméthyl éthylène carbonate)].

Les profils des spectres SM-FAB positif (matrice thioglycérol) caractérisés par des pics des ions $MH^+$ et $(MH - H_2O)^+$ après protomisation, ont été réalisés.

a) Polycarbonate de glycérol :

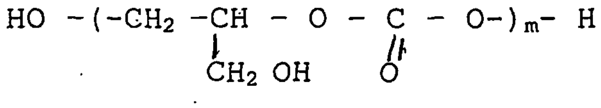

| Indice m de polymérisation | 1 | 2 | 3 | 4 | 5 | 6 | 7 |
|---|---|---|---|---|---|---|---|
| $MH^+$ pics | 137 | 255 | 373 | 491 | 609 | 727 | 845 |

b) Polyglycérol :

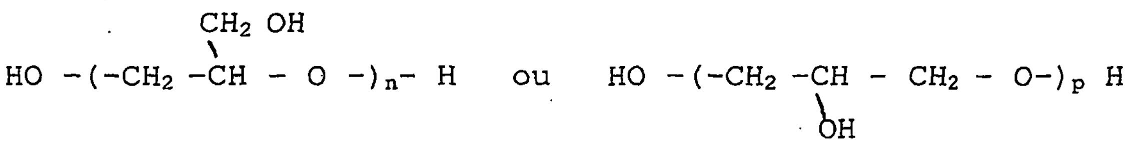

| indice n ou p de polymérisation | 1 | 2 | 3 | 4 | 5 | 6 | 7 | 8 |
|---|---|---|---|---|---|---|---|---|
| $MH^+$ pics | 93 | 167 | 241 | 315 | 389 | 463 | 537 | 611 |

c) Copolymère : [(α-hydroxyméthyl) oxyéthylène/ (α-hydroxyméthyl) éthylène carbonate]

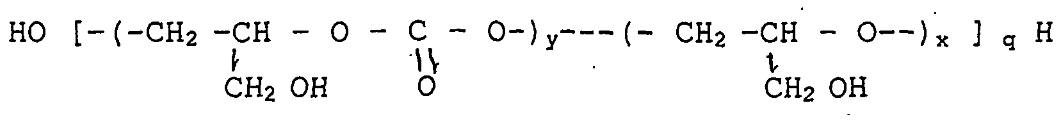

| indice q de polymérisation | 1 | 2 | 3 | 4 | 5 | 6 | 7 | 8 |
|---|---|---|---|---|---|---|---|---|
| Pics $MH^+$<br>Pics $(MH - H_2O)^+$ | 211<br>193 | 285<br>267 | 359<br>341 | 433<br>415 | 507<br>489 | 581<br>563 | 655<br>729 | 729<br>711 |

Ainsi l'enregistrement du spectre de masse (figure 1) dévoile la présence dans la composition selon l'invention des polycarbonates de glycérol, polyglycérol et des copolymères [(α-hydroxyméthyl) oxyéthylène/ (α-hydroxyméthyl) éthylène carbonate].

**Exemple 13 :** Séparation sélective de polycarbonate de glycérol d'une composition selon l'invention par la méthode séparative de distillation moléculaire ou distillation à « court chemin ».

La distillation moléculaire ou « à court chemin » a été effectuée au moyen d'un dispositif pilote KDT6 de UIC-GMBH.

La composition organique selon l'invention, conforme à la l'exemple 5, se compose essentiellement de polycarbonate de glycérol, en mélange avec des polyglycérols, des copolymères [(α-hydroxyméthyl) oxyéthylène/(α-hydroxyméthyl éthylène carbonate)] des copolymères [(α-alkyl) oxyéthylène/(α-alkyl) éthylène carbonate] dans lesquels le radical alkyl est H ou une chaîne hydrocarbonée en $C_1$ à $C_4$, des copolymères [(α-alkyl) oxyéthylène/(α-hydroxyalkyl) oxyéthylène] et des coproduits et résidus réactionnels qui sont du carbonate de glycérol, du carbonate d'éthylène, des glycols et autres.

Cette composition organique a d'abord subi un étêtage pour éliminer les premières de distillat à une température au plus égal à 165°C.

La composition organique selon l'invention, après étêtage, représente un poids de 3880 g.

Cette composition a fait d'abord l'objet d'un distillation à 165°C sous une pression réduite qui a donné 590 g de distillat et 3290 g de résidus. Ce résidu (3290 g) a été soumis à une distillation à 185°C sous la même pression réduite qui a donné 67,8 g de distillat.

Ainsi de proche en proche, à partir de la température de 165°C, des paliers de distillation ont été réalisés, pour lesquels les distillats et les résidus ont été recueillis. Les viscosités de ces distillats et résidus ont été mesurées et il apparaît que plus la température de distillation est élevée, plus les fractions séparées ont une viscosité plus élevée (c'est-à-dire des poids moléculaires de plus en plus élevés).

Les résultats de la distillation par paliers successifs sont rassemblés dans le tableau ci-après, ce tableau comprenant les viscosités en centistock (cSt).

**Tableau 4**

| Température °C | Pression mb | Distillat (g) | Viscosité (cSt) A 40°C | Résidu (g) | Viscosité (cSt) A 40°C * | Débit (g/h) |
|---|---|---|---|---|---|---|
| Référence | Avant distillation | | 7500 | | 110 | |
| 165 | 2.10-2 | 590 | 260 | 3290 | 142 | Environ 1000 |
| 185 | 2.10-2 | 67.8 | 903 | Collecte | | |
| 205 | 2.10-2 | 84.6 | 1300 | Collecte | | |
| 220 | 2.10-2 | 81.9 | 1725 | Collecte | | |
| 240 | 2.10-2 | 111 | 2070 | Collecte | 162 | |
| 250 | 2.10-2 | 286 | 2204 | 530 | 192 | 1200 |
| Piège N2 liquide | Après distillation | | 84 ** | | | |
| Bilan % (dernière/ global) | | 35/54.4 | | 65/45.6 | | |

* mesure de viscosité effectuée après une dilution à 25% dans du carbonate de glycérol
** à titre de comparaison, la viscosité du carbonate de glycérol à 40°C est de 36 cSt.

A travers les résultats énoncés par ce tableau, il apparaît que la distillation à « court-chemin » permet :

- de fractionner les polymères et copolymères de la composition organique selon l'invention se manifestant par des pouvoirs épaississants dans les distillats et les résidus (l'évolution des viscosités en corrélation avec les poids moléculaires) ;
- de séparer de 35 jusqu'à environ 55% en poids des différents distillats et résidus de la composition organique selon l'invention suivant les besoins et avec un débit acceptable et extrapolable industriellement.

**Exemple 14 :** Application des compositions organiques selon l'invention à la lubrification : propriétés épaississantes.

Les compositions organiques selon l'invention provenant des exemples n° 1 à 4 sont totalement solubles dans le carbonate de glycérol (CG) et dans l'eau. Elles sont testées en dilution dans ces deux solvants ou bien telles quelles.

Dans le domaine des lubrifiants industriels, la viscosité est un paramètre fondamental et conditionne l'épaisseur du film lubrifiant. Pour les utilisateurs, une gamme de viscosité est proposée, chaque viscosité correspondant à une application précise : une classification ISO basée sur la viscosité (ISO 3448) des lubrifiants industriels existe et permet

de différencier ces lubrifiants les uns des autres. Par exemple, l'indication « ISO 46 » veut dire que le lubrifiant ainsi repéré possède une viscosité cinématique de 46 cSt avec un écart de +/- 10%, mesuré à 40°C.

Toutes les données expérimentales sont réunies dans le tableau 4.

**Tableau 5 :** Composition organique selon l'invention en solution dans du carbonate de glycérol et telle quelle.

| Composition organique issue de l'exemple : | ISO46 (% mélange) | ISO68 (% mélange) | Tel Quel à 100°C | Tel Quel à 40°C |
|---|---|---|---|---|
| 2 | | | 8.07 | 94.1 |
| 3 | | 19 | | 30200 |
| 1 | 65 | | 62 | 6.1 |
| 4 | 13 | | 365 | 18200 |

Ainsi pour avoir une classification :

- de grade ISO46, il faut un mélange de 65% en poids de la composition organique selon l'invention avec 35% en poids de carbonate de glycérol,
- de grade ISO68, il faut un mélange de 19% en poids de la composition organique selon l'invention avec 81% en poids de carbonate de glycérol.

Enfin la composition selon l'invention est soumise telle quelle à une mesure de viscosité à 100°C et à 40°C.

**Tableau 6 :** Composition organique selon l'invention en solution dans l'eau et telle quelle.

| Composition organique issue de l'exemple : | ISO46 (% mélange) | ISO68 (% mélange) | Tel Quel à 100°C | Tel Quel à 40°C |
|---|---|---|---|---|
| 3 | 70<br>(42cSt) | | | |
| 3 | | | | 30200 |
| 4 | 70<br>(49cSt) | | 365 | 18200 |

Ces exemples montrent que les compositions organiques selon l'invention (débarrassées des résidus catalytiques insolubles) sont parfaitement solubles dans l'eau, dans le carbonate de glycérol, dans tous les solvants polaires et que dans ces milieux, elles sont de très bons épaississants malgré leurs relatives faibles poids moléculaires.

**Exemple 15 :**

Propriétés anti-usure et extrême pression :

Ces propriétés ont été mesurées par une machine dénommée « machine ou essai 4 billes » d'après respectivement les normes ASTM D4172 et D2783. On détermine après test en présence des lubrifiants la trace d'usure d'une bille (en mm) sous charge constante (40 kg), tournant sur 3 autres billes ou bien la charge de soudure des billes (charge croissante). Les exemples suivants ont été conduits avec des billes aciers 100C6 en comparaison avec des fluides hydrauliques commerciaux HFC et HFDU standard du marché et d'après la recommandation CETOP R97H des fluides hydrauliques difficilement inflammables et constituant des références de comparaison.

**Tableau 7**

| Composition organique issue de l'exemple : | Solvant | Diamètre (mm) | Charge soudure (kg) |
|---|---|---|---|
| 2 | Tel Quel | 0.74 | 300 |
| 3 | Tel Quel | 0.40 | 300 |
| 1 | Tel Quel | 0.95 | 330 |

(suite)

| Composition organique issue de l'exemple : | Solvant | Diamètre (mm) | Charge soudure (kg) |
|---|---|---|---|
| 3 | Carbonate de Glycérol | 0.87 | 230 |
| 1 | Carbonate de Glycérol | 0.85 | 200 |
| 4 | Carbonate de Glycérol | 0.85 | 260 |
| 4 | Eau | 0.56 | 200 |
| 4 | Eau | 0.57 | 170 |
| HFC (ISO46) | Eau | 0.65 | 100 |
| HFDU (ISO46) | Esters végétaux | 0.60 | 150 |

Les mêmes essais ont été réalisés également sur des billes INOX (304L).

**Tableau 8**

| composition organique issue de l'exemple : | Solvant | Diamètre (mm) | Charge soudure (kg) |
|---|---|---|---|
| 2 | Tel Quel | | 170 |
| 3 | Carbonate de Glycérol | | 150 |

Les compositions organiques selon l'invention sont comme dans les exemples précédents dissoutes dans un solvant (grade ISO46 ou 68) avant essai ou telles quelles.

Il est constaté que tous les essais conduits à partir des compositions organiques selon l'invention mises en oeuvre telles quelles, sont ou dissoutes dans du carbonate de glycérol ou de l'eau et conduisent à des résultats au moins égaux à ceux procurés par les témoins mais quasiment toujours supérieurs à ceux des témoins.

**Exemple 16 :** Propriétés anti-frictions : (figure 6)

La performance anti-friction des compositions organiques selon l'invention déterminée au moyen d'un tribomètre Cameron Plint (géométrie cylindre/plan acier 100C6), en mouvement réciproque de fréquence 6Hz, en pur glissement avec une vitesse de glissement de 10 cm/s et une charge de Hertz maximale de 845MPa. Les compositions selon l'invention et la composition témoin HFDU ISO46 étaient à température ambiante au départ. Les coefficients de frottement et usures des produits testés sont de loin supérieurs par rapport au témoin comme le montre le tableau ci-après :

**Tableau 9**

| Composition organique issue de l'exemple | Coefficient de frottement | Usure en micron mètre |
|---|---|---|
| 3 | 0,08 | Environ 2 µm |
| 4 | 0,07 | Environ 2 µm |
| Témoin HFDU ISO46 | 0,14 | 20 µm |

La figure 6 montre également la stabilité des coefficients de frottement en charge en fonction du temps montrant la durabilité des performances sous contrainte.

Ces propriétés (anti-usure, modificateur de friction, « extrême pression » sont particulièrement recherchées dans les lubrifiants en général mais plus particulièrement dans les lubrifiants de déformation (frappe, extrusion, emboutissage, étirage, tréfilage etc...) et d'usinage (tournage, rectification, taraudage etc...) des aciers et autres matériaux métalliques...

**Exemple 17 : Propriétés rhéologiques à basses températures** : recherche d'un effet anti-congélation.

L'écoulement des lubrifiants industriels à basse température, par exemple dans le cas des fluides hydrauliques, est une propriété particulièrement recherchée dans les régions froides et au démarrage (d'installations). Cette propriété a été évaluée d'après la norme ASTM D97.

Pour ce faire, la composition organique issue de l'exemple 4 a été dissoute dans du carbonate de glycérol pour obtenir un grade de viscosité ISO46 comme les 2 témoins standards du marché.

**Tableau 10**

| Composition organique issue de l'exemple 4 | | Solvant | Point d'écoulement (°C) |
|---|---|---|---|
| | | Carbonate de glycérol | - 40 |
| Témoins | HFDU (ISO46) | Esters végétaux | - 24 |
| | HF (ISO46) | Bases minérales | - 24 |
| | HFC (IS046) | Eau | - 30 |

Il est constaté que la composition selon l'invention révèle une excellente résistance au froid par rapport aux témoins.

**Exemple 18 :** Propriétés surfactantes :

Les tensions superficielles des solutions tous au grade de viscosité ISO46 (excepté le carbonate de glycérol et l'eau) ont été mesurées à 25°C par un tensiomètre à anneau et montrent les propriétés surfactantes de ces mélanges surtout en milieu aqueux et en comparaison avec un polyglycérol.

**Tableau 11**

| | carbonate de glycérol | Eau | Polyglycérol commercial (Solvay) 76% en poids dans l'eau Témoin | Composition selon l'invention provenant de l'exemple 3 (70% en poids dans de l'eau) | Composition selon l'invention provenant de l'exemple 4 (65% en poids dans du Carbonate de glycérol) | composition selon l'invention provenant de l'exemple 7 (88, 5% en poids dans l'eau) |
|---|---|---|---|---|---|---|
| Densité (1) | 1.386 | 1 | 1.1991 | 1.210 | 1.366 | 1.298 |
| Tension superficielle (2) | 53.81 | 70 | 62.39 | 33.45 | 51.72 | 48.09 |
| (1) obtenue à 25°C (densimètre)<br>(2) obtenue à 25°C | | | | | | |

Composition dissoute dans du carbonate de glycérol selon la norme ISO46.

**Exemple 19 :** stabilité à l'hydrolyse et à l'oxydation. (figure 7)

La composition organique selon l'invention issue de l'exemple 3 a été dissoute dans du carbonate de glycérol pour avoir un grade de viscosité ISO46. Cette composition organique diluée a été soumise à un bullage d'air (10 litres/h chauffée à 95°C) en présence de copeaux de fonte et d'une lame de cuivre. L'état de dégradation de la composition selon l'invention a été suivi par l'augmentation de la viscosité dans le temps mesuré en cSt.

Le fluide témoin HFDU ISO46 à base d'esters végétaux a été soumis aux mêmes conditions expérimentales de comportement.

**Exemple 20 :** Résistance à l'inflammation

a) Essai au jet pulvérisé « dégagement de chaleur d'une flamme stabilisée » (« Commission Européenne » Rapport 7e édition de Luxembourg : Exigences et essais applicables aux liquides difficilement inflammables utilisés pour les transmissions mécaniques et les régulations (hydrostatiques et hydrocinétiques).

Le principe est le suivant : Dans une chambre de combustion dans laquelle circule de l'air, un jet pulvérisé

composé de liquide (produit à tester) et d'air sous pression est soumis à une flamme définie d'un brûleur à gaz. On mesure les températures des fumées et des gaz en sortie et de l'air à l'entrée avec et sans le jet et on détermine un indice d'inflammabilité (RI) et en même temps, on mesure la longueur de la flamme (RL), la densité optique des fumées etc...Suivant principalement, les 2 premiers paramètres, une classification de dangerosité à l'inflammation est donné dans le tableau suivant, plus le RI ou le RL est élevé, plus le fluide hydraulique est difficilement inflammable et sa longueur de flamme faible.

**Tableau 12 :** INFLAMMABILITÉ (classement principal)

| Classe | A | B | C | D | E | F | G | H |
|---|---|---|---|---|---|---|---|---|
| Indice d'inflammabilité RI | > 100 | 100-80 | 79-65 | 64-50 | 49-36- | 35-25 | 24-14 | < 14 |
| (longueur de flamme) RL | > 100 | 100-56 | 55-51 | 50-11 | 10-7 | <7 | | |

Les compositions suivant l'invention ont été réalisées dans l'eau et dans le carbonate de glycérol en comparaison avec des échantillons du commerce standard, toutes de grade ISO46 ont été soumises à ce test, neuves et après cisaillement mécanique dans le test « Bosch » (CETOP RP112H), 250 cycles, ce test permettant d'évaluer la stabilité de l'indice d'inflammabilité des produits en fonctionnement dans les centrales hydrauliques.

**Tableau 13 :** RI des composés avec les témoins commerciaux standards

| Echantillons testés | Solvant | RI | Stabilité RI en fonctionnement |
|---|---|---|---|
| HFDU (ISO46) | Esters végétaux | 6-14 | Stable |
| HFDU (ISO46) | Esters végétaux + additifs anti-brouillard | 13-28 | Instable : < 14 |
| HFC (ISO46) | Eau (40%) | 65-75 | Stable |
| HFDR (ISO46) | Esters phosphates | 30-35 | Stable |
| Exemple 4 | Carbonate de glycérol | 25 | Stable |
| Exemple 5 | Eau (30%) | 75 | Stable |

**Tableau 14 :** RI et RL des composés avec les témoins

| Echantillons testés | Solvant | RI | RL |
|---|---|---|---|
| HFDU (ISO46) | Esters végétaux + esters phosphate + additifs anti-brouillard | 19 | 7 |
| Composition selon l'invention de l'exemple 3 | Carbonate de glycérol | 25 | 31 |

b) La chaleur de combustion (kJ/g) a également été mesurée selon la norme ASTM D240. La chaleur de combustion caractérise l'énergie calorifique dégagée par un composé en brûlant. Plus cette valeur est élevée, plus le composé est un bon carburant et plus le « feu » s'entretient par ce facteur qui est la température.

**Tableau 15**

| Echantillons | Chaleur de combustion (kJ/g) |
|---|---|
| Huiles minérales | 44 |
| Heptane | 40.2 |
| Esters végétaux | 38.2 |
| Esters phosphates | 34.8 |
| Ethanol | 26.4 |
| Méthanol | 19.6 |
| Composition selon l'invention de l'exemple 3 dans du carbonate de glycérol selon le grade ISO46 | 14.5 |

(suite)

| Echantillons | Chaleur de combustion (kJ/g) |
|---|---|
| Composition selon l'invention de l'exemple 2 dans du carbonate de glycérol selon le grade ISO46 | 14.3 |
| Témoin HFC (40% eau) ISO46 | 12.6 |

**Exemple 21 :**

Compatibilité aux joints élastomériques

La composition organique selon l'invention provenant de l'exemple 4 a été soumis au test de compatibilité avec les joints d'étanchéité de différents types d'élastomères d'après la norme ISO672 et se révèle « compatible » d'après ces normes.

**Tableau 16**

| Elastomère | T°C/durée h | Volume % | Dureté DIDC | Contrainte Rupture % | Allongement % |
|---|---|---|---|---|---|
| NBR (1) | 100°C/68 h | 3.17 | - 5 | 0,22 | - 1.37 |
| EPDM (2) | 100°C/68 h | 0.02 | - 2 | 4,89 | 5.44 |
| FPM (3) | 100°C/68 h | 1.07 | 1 | - 13,42 | 28.58 |
| (1) NBR : Nitrile/Butyle/Rubber<br>(2) EPDM : Ethylène/Propylène/Diène<br>(3) FPM : Polymère fluoré | | | | | |

**Exemple 22 :**

Biodégradabilité

La composition organique selon l'invention issue de l'exemple 4 a été soumis au test de biodégradation d'après la norme OCDE 301B, son taux de biodégradabilité a été déterminé à 90.8% au bout de 28 jours.

**Exemple 23 :**

Boue de forage pour tunneliers ou exploitations pétrolières :
Les boues de forage sont constituées de bentonite (argile spécifique) et d'additifs organiques et minéraux divers. Parmi leurs nombreuses caractéristiques, leur rhéologie, c'est-à-dire leur propriété d'écoulement (viscosité) est essentielle dans les différentes phases d'utilisation. Pour déterminer la capacité des compositions organiques selon l'invention à être utilisées dans les boues de forage, la composition selon l'invention, issue de l'exemple 3 a été mise en oeuvre dans une boue de forage à base de bentonite à 30g/l dans l'eau.

D'autres échantillons de boues de forage ont été préparées à titre de témoin (30 et 60g/l), et d'autres recevant du carbonate de glycérol, ou du polyglycérol. La rhéologie de chacun de ces échantillons a été évaluée au moyen d'un viscosimètre rotatif FANN qui donne un profil de viscosité dynamique en millipascal seconde (mPa.s) en fonction du cisaillement exprimé en seconde $^{-1}$ ($S^{-1}$), cette viscosité dynamique étant proportionnelle à la vitesse de rotation du mobile du viscosimètre : une extrapolation de ces mesures conduit à un seuil d'écoulement mesuré en Pascal (Pa).

En pratique, un seuil d'écoulement élevé accompagné d'une viscosité dynamique à 1021 $S^{-1}$ le plus faible possible, sont en général recherchés pour avoir une boue de forage qui se pompe facilement et qui crée un « cake » très épais au front d'attaque de l'outil sur le terrain, qui assure une étanchéité parfaite dans les deux sens et, grâce à une portance importante, une évacuation facilitée des débris de terrains excavés.

**Tableau 17**

| | Viscosité à 85 $S^{-1}$ | Viscosité à 170 $S^{-1}$ | Viscosité à 340 $S^{-1}$ | Viscosité à 511 $S^{-1}$ | Viscosité à 1021 $S^{-1}$ | Seuil d'écoulement (Pa) |
|---|---|---|---|---|---|---|
| Boue de forage bentonite à 30g/l (1) Témoin 1 | 5.4 | 5.4 | 5.25 | 5.3 | 6.75 | Faible, non mesurable |
| (1) + 0,5% carbonate de glycérol | 36.6 | 23.1 | 15.3 | 12.4 | 9.65 | 2.64 |
| (1) + 0,5% de la composition de l'exemple 4 | 109.8 | 61.8 | 35.55 | 26.1 | 16.75 | 8.98 |
| (1) + 0,5% polyglycérol | 10.2 | 8.7 | 7.35 | 6.8 | 7.55 | Faible, non mesurable |
| Boue de forage bentonite à 60g/l Témoin 2 | 67.8 | 45.9 | 31.8 | 25.7 | 19.3 | 6.5 |

La composition organique selon l'invention révèle des qualités propres à son utilisation dans le domaine des boues de forage.

## Revendications

1. Composition organique présentant des caractéristiques de grande stabilité thermique, de résistance au feu, de multifonctionnalité tribologique, de biodégradabilité, de non-toxicité et d'écotoxicité, de résistance à l'oxydation et l'hydrolyse de haut pouvoir mouillant, d'excellentes propriétés rhéologiques, électriques, qui se **caractérise en ce qu'**elle comprend au moins :

   a) des polycarbonates de glycérol représentés par la formule générale

   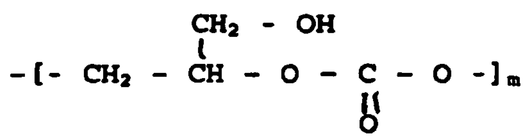

   dans laquelle « m » est au moins égal à 2, prend une valeur comprise entre 2 et 100.
   b) des polyglycérols répondant aux formules générales

   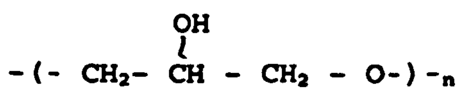 et/ou 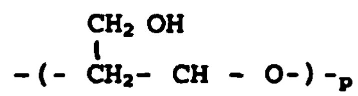

   dans laquelle « n » et « p » sont au moins égal à 2, prennent une valeur comprise entre 2 et 150.
   c) des copolymères[($\alpha$-hydroxyméthyl) oxyéthylène ($\alpha$-hydroxyméthyl) éthylène carbonate] représentés par la

formule générales :

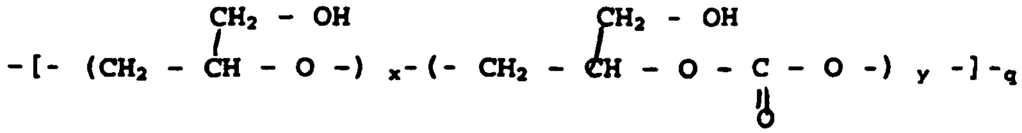

dans laquelle « x » est au moins égal à 2 et prend une valeur comprise entre 2 et 100, « y » est au moins égal à 2 et prend une valeur comprise entre 2 et 100 et « q » est au moins égal à 2 et prend une valeur comprise entre 2 et 100.

d) éventuellement des copolymères [(α-alkyl) oxyéthylène/(α-alkyl) éthylène carbonate] représentés par la formule générale :

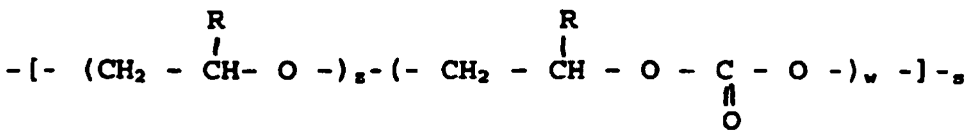

dans laquelle « z » est au moins égal à 2 et prend une valeur comprise entre 2 et 100, « w » est au moins égal à 2 et prend une valeur comprise entre 2 et 100 et « s » est au moins égal à 2 et prend une valeur comprise entre 2 et 100, tandis que R est H ou une chaîne hydrocarbonée en $C_1$ à $C_4$.

e) Eventuellement des copolymères [(α-alkyl) oxyéthylène/(α-hydroxyalkyl) oxyéthylène] représentés par la formule générale :

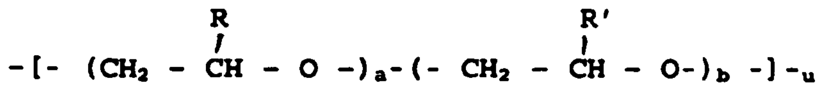

dans laquelle « a » est au moins égal à 2 et prend une valeur comprise entre 2 et 100, « b » est au moins égal à 2 et prend une valeur comprise entre 2 et 100 et « u » est au moins égal à 2 et prend une valeur comprise entre 2 et 100, tandis que R est H ou une chaîne hydrocarbonée en $C_1$ à $C_4$ et R' est une chaîne hydrocarbonée hydroxylée en $C_1$ à $C_4$.

**2.** Composition organique selon la revendication 1 **caractérisée en ce qu'**elle contient :

- de 5% en poids à 85% en poids de polycarbonate de glycérol
- de 15% en poids à 50% en poids de polyglycérol
- de 0,1% en poids à 50% en poids de poly[(α-hydroxyméthyl) oxyéthylène/(α-hydroxyméthyl éthylène carbonate)]
- de 0% à 50% en poids de copolymères [(α-alkyl) oxyéthylène/(α-alkyl) éthylène carbonate] dans lesquels l'α-alkyl est choisi dans le groupe formé par l'hydrogène et une chaîne hydrocarbonée en $C_1$ à $C_4$ et l'α-hydroxyalkyl est une chaîne hydroxylée en $C_1$ à $C_4$.

**3.** Composition organique selon l'une au moins des revendications 1 et 2 **caractérisée en ce qu'**elle contient également :

- de 0,1% en poids à 60% en poids de carbonate de glycérol
- de 5% en poids à 50% en poids de glycérol.
- de 1% en poids à 5% en poids d'un mélange de carbonates organiques autres que le carbonate de glycérol et des alcools coproduits de réactions.

**4.** Composition organique selon l'une au moins des revendications 1 ou 2 **caractérisée en ce que** le rapport polycarbonate de glycérol/polyglycérol est compris entre 0,25 et 6.

**5.** Composition organique selon l'une au moins des revendications 1 à 4 **caractérisée en ce que** le poids moléculaire

moyen de chaque polymère présent dans ladite composition mesurée par Spectrométrie de masse MS-FAB est compris entre 100 g/mol et 10000 g/mol.

**6.** Composition organique selon l'une au moins des revendications 1 à 5 **caractérisée en ce qu'**elle détient un taux d'hydroxyle mesuré compris entre 200 et 1200 milligrammes de KOH par gramme d'échantillon et préférentiellement entre 650 et 1000 (Norme NFT 60/213).

**7.** Composition organique selon l'une au moins des revendications 1 à 6 **caractérisée en ce que** sa viscosité est comprise entre 50 et 50 000 centistok à 40°C (cSt).

**8.** Polycarbonates de glycérol, homopolymères, en tant que produits nouveaux, répondant à la formule générale :

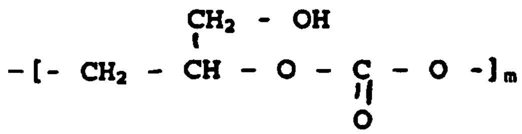

dans laquelle « m » est au moins égal à 2, prend une valeur comprise entre 2 et 100.

**9.** Copolymères [(α-hydroxyméthyl) oxyéthylène/(α-hydroxyméthyl éthylène carbonate) représentés par la formule générale :

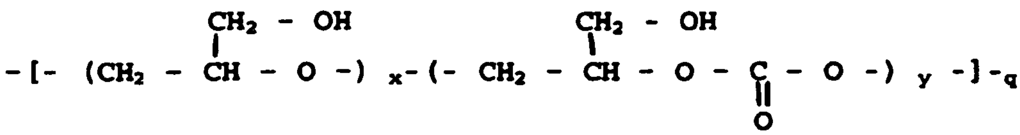

dans laquelle « x » est au moins égal à 2 et prend une valeur comprise entre 2 et 100, « y » est au moins égal à 2 et prend une valeur comprise entre 2 et 100 et « q » est au moins égal à 2 et prend une valeur comprise entre 2 et 100.

**10.** Copolymères [(α-hydroxyméthyl) oxyéthylène/(α-hydroxyméthyl éthylène carbonate) selon la revendication 9 extraits de la composition organique selon l'une au moins des revendications 1 à 7.

**11.** Procédé de production catalytique d'une composition organique, comprenant au moins des polycarbonates de glycérol, en mélange avec d'autres composés utiles, en particulier, des polyglycérols, des copolymères [(α-hydroxyméthyl) oxyéthylène/(α-hydroxyméthyl éthylène carbonate)], éventuellement des copolymères [(α-alkyl) oxyéthylène/(α-alkyl) éthylène carbonate], éventuellement des copolymères [(α-alkyl) oxyéthylène/(α-hydroxyalkyl) oxyéthylène], du carbonate de glycérol et/ou d'autres carbonates organiques, du glycérol et d'autres composés coproduits et/ou résiduels, par une polymérisation catalytique dans un milieu réactionnel hétérogène comportant une phase organique liquide formée d'au moins un composé donneur de fonctions hydroxyles et d'au moins un composé donneur de fonctions carbonates, une phase solide pouvant être solubilisée formée d'un catalyseur contenant des sites actifs au sens de Lewis et/ou de Bronsted et une phase gazeuse ambiante, le milieu réactionnel étant chauffé, **caractérisé en ce que** la polymérisation catalytique est conduite :

- dans une première étape, en portant le milieu réactionnel hétérogène à une température d'au plus 160°C, en soumettant le milieu réactionnel et la phase gazeuse ambiante à une pression au plus égale à $10^5$ Pascal, en contrôlant le flux des coproduits réactionnels tout au long de ladite étape,
- puis dans une deuxième étape, dès lors que se produit un début de dégagement de $CO_2$, en portant le milieu réactionnel hétérogène à une température au moins égale à la température finale de la première étape, en soumettant la phase gazeuse contenant le $CO_2$ généré in situ à une pression au moins égale à $2{,}5.10^3$ Pascal et en contrôlant le dégagement gazeux naissant.

**12.** Procédé de production catalytique selon la revendication 11
**caractérisé en ce que** les quantités de composés donneurs de fonctions hydroxyles et de composés donneurs de fonctions carbonates mises en présence dans le milieu réactionnel sont d'environ 0,65 à 2,00 moles et préférentiellement de 0,80 à 1,20 moles de composés donneurs de fonctions carbonates pour une mole de composés

donneurs de fonctions hydroxyles.

13. Procédé de production catalytique selon l'une au moins des revendications 11 ou 12 **caractérisé en ce que** les composés donneurs de fonctions hydroxyles sont choisis dans le groupe constitué par le glycérol, le glycidol, l'éthylène glycol, les propanes diols, le 2,2 diméthyl 1,3 dioxolane 4 méthanol pris seuls ou en mélange.

14. Procédé de production catalytique selon l'une au moins des revendications 11 à 13 **caractérisé en ce que** les composés donneurs de fonctions carbonates sont choisis dans le groupe constitué par l'urée, les carbonates d'alkylène cycliques, en particulier le carbonate d'éthylène, le carbonate de propylène, le carbonate de butylène, les carbonates de dialkyl en particulier le carbonate de diéthyl, le carbonate de diméthyl.

15. Procédé de production catalytique selon l'une au moins des revendications 11 à 14 **caractérisé en ce que** la réaction catalytique de polymérisation s'initie à travers une carbonatation directe mettant en oeuvre un composé donneur de fonctions hydroxyles qui est le glycérol et un composé donneur de fonctions carbonates qui est l'urée.

16. Procédé de production catalytique selon l'une au moins des revendications 11 à 15 **caractérisé en ce que** la réaction catalytique de polymérisation s'initie à travers une transcarbonatation mettant en oeuvre au moins un composé donneur de fonctions hydroxyles choisi dans le groupe constitué par le glycérol, le glycidol, l'éthylène glycol, les propanes diols, le 2,2 diméthyl 1,3 dioxolane 4 méthanol, et au moins un composé donneur de fonctions carbonates choisi dans le groupe constitué par les carbonates d'alkylène cycliques, en particulier le carbonate d'éthylène et le carbonate de propylène, le carbonate de butylène et les carbonates de dialkyls en particulier le carbonate de diméthyl et le carbonate de diéthyl.

17. Procédé de production catalytique selon l'une au moins des revendications 11 à 13 **caractérisé en ce que** le catalyseur intervenant dans la réaction catalytique est choisi parmi les sels métalliques du groupe constitué par les sulfates, les phosphates, les nitrates métalliques, préférentiellement parmi les sulfates métalliques du groupe constitué par le sulfate de zinc, le sulfate de manganèse, le sulfate de magnésium, le sulfate de nickel, le sulfate de fer, le sulfate de cobalt, le sulfate de sodium.

18. Procédé de production catalytique selon l'une au moins des revendications 11 à 13 **caractérisé en ce que** le catalyseur intervenant dans la réaction catalytique est choisi parmi les oxydes métalliques simples en particulier, l'oxyde de zinc, de magnésium, d'étain, de nickel et de fer, de cobalt, de manganèse ou parmi les oxydes métalliques doubles en particulier, l'oxyde d'étain et de sodium, l'oxyde de zinc et de sodium, l'oxyde de magnésium et de sodium.

19. Procédé de production catalytique selon l'une au moins des revendications 11 à 13 **caractérisé en ce que** le catalyseur mis en oeuvre est choisi parmi les argiles de la famille des attapulgites (zéolithes) de formule générale :

$$Si_8Mg_5O_{20}(OH)_2(OHH^+)_4, 4H_2O$$

dans laquelle le magnésium peut être remplacé en tout ou partie par de l'aluminium, ces argiles étant des complexes d'oxydes métalliques et de fonctions base métalliques.

20. Procédé de production catalytique selon l'une au moins des revendications 11 à 13 **caractérisé en ce que** le catalyseur est choisi dans le groupe constitué par des composés chimiques, solubles dans le milieu réactionnel en particulier l'hydroxyde de sodium, l'hydroxyde de potassium, les amines supportés, les alcoolates métalliques en particulier le méthylate ou l'éthylate de sodium, le glycérol.

21. Procédé de production catalytique selon l'une au moins des revendications 11 à 13 **caractérisé en ce que** le catalyseur est une résine échangeuse d'ions choisie dans le groupe des résines cationiques sur lesquelles sont fixées des métaux en particulier, du zinc, du magnésium, de l'étain et dans le groupe des résines macroporeuses anioniques hydroxylées ou bicarbonatées.

22. Procédé de production catalytique selon l'une au moins des revendications 11 à 13 **caractérisé en ce que** le catalyseur est un composé organo-métallique choisi préférentiellement dans le groupe constitué par les organomagnésiens, les organozinciques, les organostaniques.

23. Procédé de production catalytique selon l'une au moins des revendications 11 à 22 **caractérisé en ce que** le catalyseur est introduit dans le milieu réactionnel à raison de 0,01% en poids à 5% en poids par rapport au composé

donneur de fonctions hydroxyles introduit dans le milieu réactionnel.

**24.** Procédé de production catalytique selon l'une au moins des revendications 11 à 13 **caractérisé en ce que** la pression appliquée au milieu réactionnel au cours de la première étape est préférentiellement comprise entre $2.10^2$ et $5.10^4$ Pascal.

**25.** Procédé de production catalytique selon l'une au moins des revendications 11 à 13 **caractérisé en ce que** la pression appliquée au milieu réactionnel au cours de la deuxième étape est comprise préférentiellement entre 2,5 $10^3$ et 2,5 $10^6$ Pascal.

**26.** Procédé de production catalytique selon l'une au moins des revendications 11 à 13 **caractérisé en ce que** la température à laquelle est porté le milieu réactionnel au cours de la deuxième étape est au moins égale à la température finale de la première étape et préférentiellement choisie dans l'intervalle compris entre 180°C et 220°C.

**27.** Applications prises seules ou en mélange de la composition organique, des polycarbonates de glycérol, des copolymères [ (α-hydroxyméthyl) oxyéthylène/(α-hydroxyméthyl éthylène carbonate),
extraits de ladite composition selon les revendications 1 à 7 ou encore résultant du procédé selon les revendications 11 à 26 aux domaines techniques, des lubrifiants et additifs lubrifiants des fluides hydrauliques, en particulier ceux résistants au feu, les agents lubrifiants, plus particulièrement les lubrifiants industriels dont les lubrifiants pour le travail et la déformation des métaux, les agents de démoulage, les produits pour le traitement et la décoration du bois, dans les composés résistants au feu, de l'ignifugation, de la détergence, des additifs mouillants, épaississants et dispersants de l'exploration et de la production pétrolière, du traitement des eaux, de la cosmétique, de la pharmacie, de l'alimentaire et des intermédiaires de la chimie.

## Claims

**1.** Organic composition displaying high thermal stability, fire resistance, logical multifunctionality, biodegradability, non-toxicity / ecotoxicity, oxidation and hydrolysis resistance characteristics, high wetting power, excellent rheological and electrical properties, **characterised in that** it comprises at least:

a) glycerol polycarbonates represented by the general formula

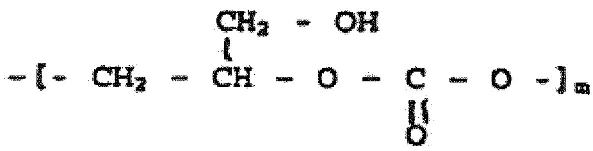

wherein "m" is at least equal to 2 and takes a value between 2 and 100.
b) polyglycerols complying with the general formulas

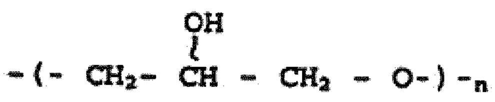

and/or

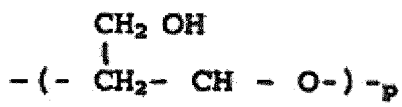

wherein "n" and "p" are at least equal to 2 and take a value between 2 and 150.
c) [(α-hydroxymethyl) oxyethylene (α-hydroxymethyl) ethylene carbonate] copolymers represented by the general formula:

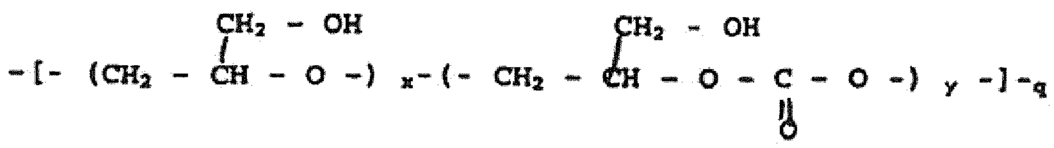

wherein "x" is at least equal to 2 and takes a value between 2 and 100, "y" is at least equal to 2 and takes a value between 2 and 100 and "q" is at least equal to 2 and takes a value between 2 and 100.
d) optionally [(α-alkyl) oxyethylene/(α-alkyl) ethylene carbonate] copolymers represented by the general formula:

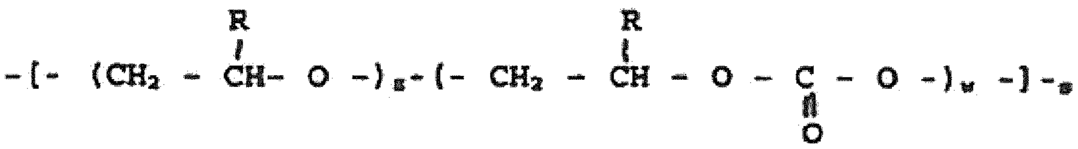

wherein "z" is at least equal to 2 and takes a value between 2 and 100, "w" is at least equal to 2 and takes a value between 2 and 100 and "s" is at least equal to 2 and takes a value between 2 and 100, whereas R is H or a $C_1$ to $C_4$ hydrocarbon chain.
e) optionally [(α-alkyl) oxyethylene/(α-hydroxyalkyl) oxyethylene] copolymers represented by the general formula:

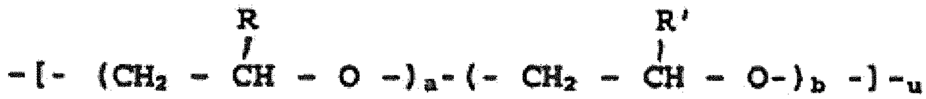

wherein "a" is at least equal to 2 and takes a value between 2 and 100, "b" is at least equal to 2 and takes a value between 2 and 100 and "u" is at least equal to 2 and takes a value between 2 and 100, wherein R is H or a $C_1$ to $C_4$ hydrocarbon chain and R' is a $C_1$ to $C_4$ hydroxylated hydrocarbon chain.

**2.** Organic composition according to claim 1 **characterised in that** it contains:

- 5% by weight to 85% by weight of glycerol polycarbonates
- 15% by weight to 50% by weight of polyglycerol
- 0.1% by weight to 50% by weight of poly[(α-hydroxymethyl) oxyethylene (α-hydroxymethyl) ethylene carbonate]
- 0% to 50% by weight of [(α-alkyl) oxyethylene/(α-alkyl) ethylene carbonate] copolymers wherein the α-alkyl is selected in the group consisting of hydrogen and a $C_1$ to $C_4$ hydrocarbon chain and the α-hydroxyalkyl is a $C_1$ to $C_4$ hydroxylated chain.

**3.** Organic composition according to at least one of claims 1 and 2 **characterised in that** it also contains:

- 0.1% by weight to 60% by weight of glycerol carbonate
- 5% by weight to 50% by weight of glycerol
- 1% by weight to 5% by weight of a mixture of organic carbonates other than glycerol carbonate and reaction byproduct alcohols.

**4.** Organic composition according to at least one of claims 1 or 2 **characterised in that** the glycerol carbonate: polyglycerol ratio is between 0.25 and 6.

**5.** Organic composition according to at least one of claims 1 to 4 **characterised in that** the mean molecular weight of each polymer contained in said composition measured by means of MS-FAB mass spectrometry is between 100 g/mol and 10,000 g/mol.

**6.** Organic composition according to at least one of claims 1 to 5 **characterised in that** it has a measured hydroxyl content between 200 and 1200 milligrams of KOH per gram of sample and preferentially between 650 and 1000 (NFT 60/213 standard).

**7.** Organic composition according to at least one of claims 1 to 6 **characterised in that** the viscosity thereof is between 50 and 50,000 Centistok at 40°C (cSt).

**8.** Glycerol polycarbonates, homopolymers, as new products, complying with the general formula:

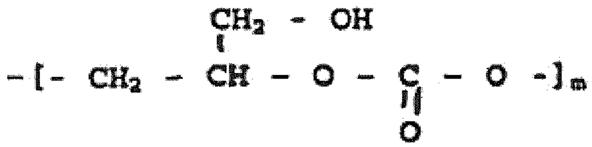

wherein "m" is at least equal to 2 and takes a value between 2 and 100.

**9.** [(α-hydroxymethyl) oxyethylene (α-hydroxymethyl ethylene carbonate) 1 copolymers represented by the general formula:

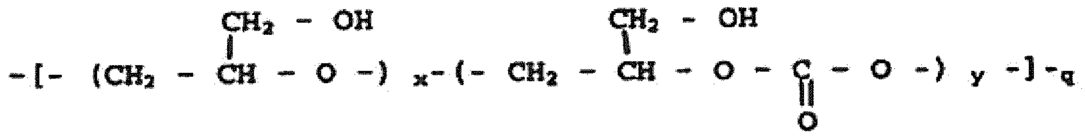

wherein "x" is at least equal to 2 and takes a value between 2 and 100, "y" is at least equal to 2 and takes a value between 2 and 100 and "q" is at least equal to 2 and takes a value between 2 and 100.

**10.** [(α-hydroxymethyl) oxyethylene (α-hydroxymethyl ethylene carbonate)] copolymers according to claim 9 extracted from the organic composition according to at least one of claims 1 to 7.

**11.** Method for the catalytic production of an organic composition, comprising at least glycerol polycarbonates, in a mixture with other useful compounds, in particular, polyglycerols, [(α-hydroxymethyl) oxyethylene / (α-hydroxymethyl ethylene carbonate)] copolymers, optionally [(α-alkyl) oxyethylene/(α-alkyl) ethylene carbonate] copolymers, optionally [(α-alkyl) oxyethylene/ (α-hydroxyalkyl) oxyethylene] copolymers, glycerol carbonate and/or other organic carbonates, glycerol and other byproduct and/or residual compounds, by means of catalytic polymerisation in a heterogeneous reaction medium comprising a liquid organic phase consisting of at least one hydroxyl function donor compound and at least one carbonate function donor, a solid phase suitable for solubilisation consisting of a catalyst containing Lewis and/or Bronsted active sites and an ambient gas phase, the reaction medium being heated, **characterised in that** the catalytic polymérisation is conducted:

- in a first step, bringing the heterogeneous reaction medium to a temperature of not more than 160°, subjecting the reaction medium and the ambient gas phase to a pressure not more than equal to $10^5$ Pascal, controlling the flow of reaction by-products throughout said step,
- and in a second step, as soon as $CO_2$ starts to be released, bringing the heterogeneous reaction medium to a temperature at least equal to the final temperature of the first step, subjecting the gas phase containing the $CO_2$ generated in situ to a pressure at least equal to $2.5 \times 10^3$ Pascal and controlling the nascent gas emission.

**12.** Catalytic production method according to claim 11 **characterised in that** the quantities of hydroxyl function donor compounds and carbonate function donor compounds placed in presence in the reaction medium are approximately 0.65 to 2.00 moles and preferentially 0.80 to 1.20 moles of carbonate function donor compounds for one mole of hydroxyl function donor compounds.

**13.** Catalytic production method according to at least one of claims 11 or 12 **characterised in that** the hydroxyl function donor compounds are selected in the group consisting of glycerol, glycidol, ethylene glycol, propane dioles, 2,2 dimethyl 1,3 dioxolane 4 methanol alone or in a mixture.

**14.** Catalytic production method according to at least one of claims 11 to 13 **characterised in that** the carbonate function donor compounds are selected in the group consisting of urea, cyclic alkylene carbonates, particularly ethylene carbonate, propylene carbonate, butylene carbonate, dialkyl carbonates, in particular diethyl carbonate, dimethyl carbonate.

**15.** Catalytic production method according to at least one of claims 11 to 14 **characterised in that** the catalytic polymerisation reaction is initiated via direct carbonation using a hydroxyl function donor compound which is glycerol and a carbonate function donor compound which is urea.

**16.** Catalytic production method according to at least one of claims 11 to 15 **characterised in that** the catalytic polymerisation reaction is initiated via transcarbonation using at least one hydroxyl function donor compound selected in the group consisting of glycerol, glycidol, ethylene glycol, propane dioles, 2,2 dimethyl 1,3 dioxolane 4 methanol, and at least one carbonate function donor compound selected in the group consisting of cyclic alkylene carbonates, particularly ethylene carbonate and propylene carbonate, butylene carbonate and dialkyl carbonates, in particular dimethyl carbonate and diethyl carbonate.

**17.** Catalytic production method according to at least one of claims 11 to 13 **characterised in that** the catalyst involved in the catalytic reaction is selected from metal salts from the group consisting of metal sulphates, phosphates, nitrates, preferentially from metal sulphates from the group consisting of zinc sulphate, manganese sulphate, magnesium sulphate, nickel sulphate, iron sulphate, cobalt sulphate, sodium sulphate.

**18.** Catalytic production method according to at least one of claims 11 to 13 **characterised in that** the catalyst involved in the catalytic reaction is selected from single metal oxides in particular, zinc, magnesium, tin, nickel and iron, cobalt, manganese oxides or from double metal oxides in particular, tin and sodium oxide, zinc and sodium oxide, magnesium and sodium oxide.

**19.** Catalytic production method according to at least one of claims 11 to 13 **characterised in that** the catalyst used is selected from clays from the attapulgite (zeolite) family having the general formula:

$$Si_8Mg_5O_{20}(OH)_2(OHH^+)_4,\ 4H_2O$$

wherein magnesium can be fully or partially replaced by aluminium, these clays being metal oxides and metal base function complexes.

**20.** Catalytic production method according to at least one of claims 11 to 13 **characterised in that** the catalyst is selected in the group consisting of chemical compounds, soluble in the reaction medium, in particular sodium hydroxide, potassium hydroxide, supported amines, metal alcoholates in particular sodium methylate or ethylate, glycerol.

**21.** Catalytic production method according to at least one of claims 11 to 13 **characterised in that** the catalyst is an ion exchange resin selected in the group of cationic resins whereon metals are fixed, in particularly, zinc, magnesium, tin and in the group of hydroxylated or bicarbonated anionic macroporous resins.

**22.** Catalytic production method according to at least one of claims 11 to 13 **characterised in that** the catalyst is an organometallic compound preferentially selected in the group consisting of organomagnesium compounds, organiozinc compounds, organotin compounds.

**23.** Catalytic production method according to at least one of claims 11 to 22 **characterised in that** the catalyst is introduced into the reaction medium at a rate of 0.01% by weight to 5% by weight with respect to the hydroxyl function donor compound introduced into the reaction medium.

**24.** Catalytic production method according to at least one of claims 11 to 13 **characterised in that** the pressure applied to the reaction medium during the first step is preferentially between $2.10^2$ and $5.10^4$ Pascal.

**25.** Catalytic production method according to at least one of claims 11 to 13 **characterised in that** the pressure applied to the reaction medium during the second step is preferentially between $2.5\ 10^3$ and $2.5\ 10^6$ Pascal.

**26.** Catalytic production method according to at least one of claims 11 to 13 **characterised in that** the temperature to which the reaction medium is heated during the second step is at least equal to the final temperature of the first step and preferentially selected in the range between 180° and 220°C.

**27.** Applications taken alone or in combination of the organic composition, glycerol polycarbonates, [($\alpha$-hydroxymethyl) oxyethylene/($\alpha$-hydroxymethyl ethylene carbonate) copolymers, extracted from said composition according to claims 1 to 7 or resulting from the method according to claims 11 to 26 to the technical fields of hydraulic fluid lubricants and lubricant additives, in particular those which are fire-resistant, lubricant agents, more specifically industrial lubricants including metal working and deformation lubricants, mould release agents, products for treating and decorating wood, in fire-resistant compounds, fire proofing, detergents, wetting additives, thickeners and dispersion

agents for oil exploration and production, water treatment, cosmetics, pharmaceuticals, food processing and chemical intermediates.

## Patentansprüche

**1.** Organische Zusammensetzung mit den Merkmalen: hohe Wärmebeständigkeit, Feuerfestigkeit, tribologische Multifunktionalität, biologische Abbaubarkeit, kleine Toxizität/Ökotoxizität, Oxidations- und Hydrolysebeständigkeit, hohe Benetzbarkeit, ausgezeichnete rheologische/elektrische Eigenschaften, die dadurch gekenntzeichnet ist, dass sie wenigstens enthält:

a) Glycerolpolycarbonate, dargestellt durch die allgemeine Formel:

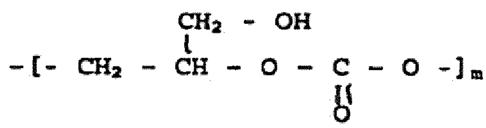

worin « m » mindestens gleich 2 ist und einen Wert zwischen 2 und 100 annimmt,
b) Polyglycerols der allgemeinen Formeln:

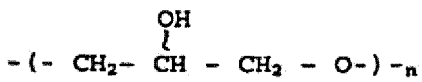

und/oder

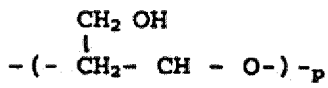

worin « n » und « p » mindestens gleich 2 sind und einen Wert zwischen 2 und 150 annehmen,
c) [(α-hydroxymethyl)-oxyethylen/(α-hydroxymethyl)-ethylencarbonat]-Copolymere, dargestellt durch die allgemeine Formel:

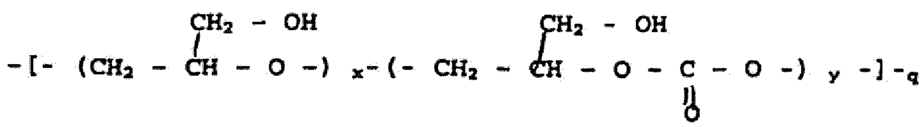

worin « x » mindestens gleich 2 ist und einen Wert zwischen 2 und 100 annimmt, « y » mindestens gleich 2 ist und einen Wert zwischen 2 und 100 annimmt und « q » mindestens gleich 2 ist und einen Wert zwischen 2 und 100 annimmt,
d) eventuell [(α-alkyl)-oxyethylen/(α-alkyl)-ethylencarbonat]-Copolymere, dargestellt durch die allgemeine Formel:

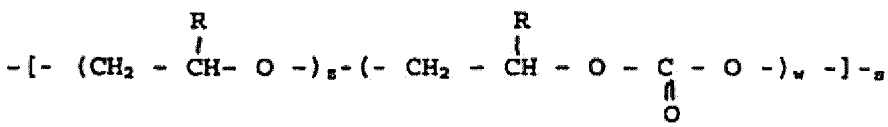

worin « z » mindestens gleich 2 ist und einen Wert zwischen 2 und 100 annimmt, « w » mindestens gleich 2 ist und einen Wert zwischen 2 und 100 annimmt und « s » mindestens gleich 2 ist und einen Wert zwischen 2 und 100 annimmt, während R Wasserstoff oder eine $C_1$-$C_4$-Kohlenwasserstoffkette ist,
e) eventuell [(α-alkyl)-oxyethylen/(α-hydroxyalkyl)-oxyethylen]-Copolymere, dargestellt durch die allgemeine Formel:

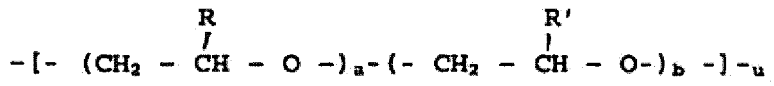

worin « a » mindestens gleich 2 ist und einen Wert zwischen 2 und 100 annimmt, « b » mindestens gleich 2 ist und einen Wert zwischen 2 und 100 annimmt und « u » mindestens gleich 2 ist und einen Wert zwischen 2 und 100 annimmt, während R Wasserstoff oder eine $C_1$-$C_4$-Kohlenwasserstoffkette ist und R' eine hydroxylierte $C_1$-$C_4$-Kohlenwasserstoffkette ist.

**2.** Organische Zusammensetzung nach Anspruch 1, dadurch gekennzeichet, dass sie enthält:

- 5 Gew.-% bis 85 Gew.-% Glycerolpolycarbonat
- 15 Gew.-% bis 50 Gew.-% Polyglycerol
- 0,1 Gew.-% bis 50 Gew.-% Poly[(α-hydroxymethyl)-oxyethylen/(α-hydroxymethyl-ethylencarbonat)]
- 0 Gew.-% bis 50 Gew.-% [(α-alkyl)-oxyethylen/(α-alkyl)-ethylencarbonat]-Copolymere, wobei das α-Alkyl ausgewählt ist aus der Gruppe bestehend aus Wasserstoff und einer $C_1$-$C_4$-Kohlenwasserstoffkette und das α-Hydroxyalkyl eine hydroxylierte $C_1$-$C_4$-Kette ist.

**3.** Organische Zusammensetzung nach wenigstens einem der Ansprüche 1 und 2, **dadurch gekennzeichnet, dass** sie weiter enthält:

- 0,1 Gew.-% bis 60 Gew.-% Glycerolcarbonat
- 5 Gew.-% bis 50 Gew.-% Glycerol
- 1 Gew.-% bis 5 Gew.-% eines Gemischs aus anderen organischen Carbonaten als Glycerolcarbonat und bei den Reaktionen mitgebildeten Alkoholen.

**4.** Organische Zusammensetzung nach wenigstens einem der Ansprüche 1 oder 2, **dadurch gekennzeichnet, dass** das Verhältnis Glycerolpolycarbonat/ Polyglycerol im Bereich zwischen 0,25 und 6 liegt.

**5.** Organische Zusammensetzung nach wenigstens einem der Ansprüche 1 bis 4, **dadurch gekennzeichnet, dass** das mittlere Molekulargewicht jedes in der mit FAB-MS massenspektrometrisch gemessenen Zusammensetzung vorliegenden Polymers im Bereich zwischen 100 g/mol und 10 000 g/mol liegt.

**6.** Organische Zusammensetzung nach wenigstens einem der Ansprüche 1 bis 5, **dadurch gekennzeichnet, dass** sie einen gemessenen Hydroxylgehalt im Bereich zwischen 200 und 1200 Milligramm KOH pro Gramm Probe und vorzugsweise zwischen 650 und 1000 hat (Norm NFT 60-213).

**7.** Organische Zusammensetzung nach wenigstens einem der Ansprüche 1 bis 6, **dadurch gekennzeichnet, dass** ihre Viskosität bei 40°C im Bereich zwischen 50 und 50 000 centistok (cSt) liegt.

**8.** Glycerolpolycarbonathomopolymere als neue Produkte der allgemeinen Formel:

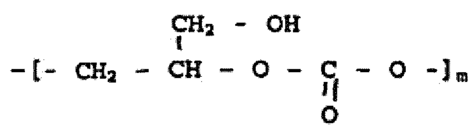

worin « m » mindestens gleich 2 ist und einen Wert zwischen 2 und 100 annimmt.

**9.** [(α-hydroxymethyl)-oxyethylen/(α-hydroxymethyl)-ethylencarbonat]-Copolymere, dargestellt durch die allgemeine Formel:

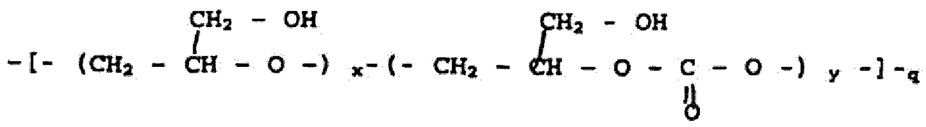

worin « x » mindestens gleich 2 ist und einen Wert zwischen 2 und 100 annimmt, « y » mindestens gleich 2 ist und einen Wert zwischen 2 und 100 annimmt und « q » mindestens gleich 2 ist und einen Wert zwischen 2 und 100 annimmt.

**10.** [(α-hydroxymethyl)-oxyethylen/(α-hydroxymethyl)-ethylencarbonat]-Copolymere nach Anspruch 9, herausgelöst aus der organischen Zusammensetzung nach wenigstens einem der Ansprüche 1 bis 7.

**11.** Verfahren zur katalytischen Herstellung einer organischen Zusammensetzung enthaltend wenigstens Glycerolpolycarbonate im Gemisch mit anderen nützlichen Verwindungen, insbesondere Polyglycerolen, [(α-hydroxymethyl)-oxyethylen/(α-hydroxymethyl)-ethylencarbonat]-Copolymeren, eventuell [(α-alkyl)-oxyethylen/(α-alkyl)-ethylencarbonat]-Copolymeren, eventuell [(α-alkyl)-oxyethylen/(α-hydroxyalkyl)-oxyethylen]-Copolymeren, Glycerolcarbonat und/oder anderen organischen Carbonaten, Glycerol und anderen mitgebildeten und/oder Restverbindungen, durch eine katalytische Polymerisation in einem heterogenen Reaktionsmedium, das eine organische flüssige Phase bestehend aus mindestens einer hydroxylfunktionellen Donorverbindung und mindestens einer carbonatfunktionellen Donorverbindung, eine solubilisierbare feste Phase bestehend aus einem Katalysator mit aktiven Zentren im Sinne von Lewis- und/oder Bronsted und eine gasförmige Umgebungsphase enthält, wobei das Reaktionsmedium erwärmt wird, **dadurch gekennzeichnet, dass** bei der katalytischen Polymerisation

- in einem ersten Schritt, das heterogene Reaktionsmedium auf eine Temperatur von höchstens 160°C erwärmt wird, das Reaktionsmedium und die gasförmige Umgebungsphase mit einem Druck von höchstens $10^5$ Pascal beaufschlagt werden und der Fluss der mitgebildeten Reaktionsprodukte kontrolliert wird,
- und in einem zweiten Schrift, sobald die $CO_2$-Freisetzung beginnt, das heterogene Reaktionsmedium auf eine Temperatur erwärmt wird, die mindestens gleich der Endtemperatur des ersten Schrittes ist, die Gasphase, die das in situ gebildete $CO_2$ enthält, mit einem Druck von mindestens $2{,}5.10^3$ Pascal beaufschlagt wird und die beginnende Gasfreisetzung kontrolliert wird.

**12.** Katalytisches Herstellungsverfahren nach Anspruch 11, **dadurch gekennzeichnet, dass** die im Reaktionsmedium vorliegenden Mengen an hydroxylfunktionellen Donorverbindungen und carbonatfunktionellen Donorverbindungen etwa 0,65 bis 2,00 mol und vorzugsweise 0,80 bis 1,20 mol carbonatfunktioneller Donorverbindungen für ein Mol hydroxylfunktioneller Donorverbindungen betragen.

**13.** Katalytisches Herstellungsverfahren nach wenigstens einem der Ansprüche 11 oder 12, **dadurch gekennzeichnet, dass** die hydroxylfunktionellen Donorverbindungen ausgewählt werden aus der Gruppe bestehend aus Glycerol, Glycidol, Ethylenglykol, Propandiolen, 2,2-dimethyl-1,3-dioxolan-4-methanol, einzeln oder in Mischung.

**14.** Katalytisches Herstellungsverfahren nach wenigstens einem der Ansprüche 11 bis 13, **dadurch gekennzeichnet, dass** die carbonatfunktionellen Donorverbindungen ausgewählt werden aus der Gruppe bestehend aus Harnstoff, zyklischen Alkylencarbonaten, insbesondere Ethylencarbonat, Propylencarbonat, Butylencarbonat, Dialkylcarbonaten, insbesondere Diethylcarbonat, Dimethylcarbonat.

**15.** Katalytisches Herstellungsverfahren nach wenigstens einem der Ansprüche 11 bis 14, **dadurch gekennzeichnet, dass** die katalytische Polymerisationsreaktion über eine direkte Carbonatation eingeleitet wird, bei der eine hydroxylfunktionelle Donorverbindung, die Glycerol ist, und eine carbonatfunktionelle Donorverbindung, die Harnstoff ist, eingesetzt werden.

**16.** Katalytisches Herstellungsverfahren nach wenigstens einem der Ansprüche 11 bis 15, **dadurch gekennzeichnet, dass** die katalytische Polymerisationsreaktion über eine Transcarbonatation eingeleitet wird, bei der mindestens eine hydroxylfunktionelle Donorverbindung ausgewählt aus der Gruppe bestehend aus Glycerol, Glycidol, Methylenglykol, Propandiolen, 2,2-dimethyl-1,3-dioxolan-4-methanol und mindestens eine carbonatfunktionelle Donorverbindung ausgewählt aus der Gruppe bestehend aus zyklischen Alkylencarbonaten, insbesondere Ethylencarbonat und Propylencarbonat, Butylencarbonat, und Dialkylcarbonaten, insbesondere Dimethylcarbonat und Diethylcarbonat, verwendet werden.

**17.** Katalytisches Herstellungsverfahren nach wenigstens einem der Ansprüchen 11 bis 13, **dadurch gekennzeichnet, dass** der in der katalytischen Reaktion zum Einsatz kommende Katalysator ausgewählt wird unter Metallsalzen aus der Gruppe bestehend aus Sulfaten, Phosphaten, Metallnitraten, bevorzugt unter Metallsulfaten aus der Gruppe bestehend aus Zinksulfat, Mangansulfat, Magnesiumsulfat, Nickelsulfat, Eisensulfat, Cobaltsulfat, Natriumsulfat.

**18.** Katalytisches Herstellungsverfahren nach wenigstens einem der Ansprüche 11 bis 13, dadurch gekennzeichet, dass der in der katalytischen Reaktion zum Einsatz kommende Katalysator ausgewählt wird unter einfachen Metalloxiden, insbesondere Zink-, Magnesium-, Zinn-, Nickel-, Eisen-, Cobalt-, Manganoxid, oder unter Doppelmetalloxiden, insbesondere Zinn- und Natriumoxid, Zink- und Natriumoxid, Magnesium- und Natriumoxid.

**19.** Katalytisches Herstellungsverfahren nach wenigstens einem der Ansprüche 11 bis 13, **dadurch gekennzeichnet, dass** der eingesetzte Katalysator ausgewählt wird unter Tonen aus der Familie der Attapulgite (Zeolithe) der allgemeinen Formel:

$$Sis_8Mg_5O_{20}(OH)_2(OHH^+)_4, 4H_2O$$

worin Magnesium ganz oder teilweise durch Aluminium ersetzt werden kann, wobei diese Tone Komplexe aus Metalloxiden und Metallbasenfunktionen sind.

**20.** Katalytisches Herstellungsverfahren nach wenigstens einem der Ansprüche 11 bis 13, **dadurch gekennzeichnet, dass** der Katalysator ausgewählt wird aus der Gruppe bestehend aus im Reaktionsmedium löslichen chemischen Verwindungen, insbesondere Natriumhydroxid, Kaliumhydroxid, Trägeraminen, Metallalkoholaten, insbesondere Natriummethylat oder Natriumethylat, Glycerol.

**21.** Katalytisches Herstellungsverfahren nach wenigstens einem der Ansprüchen 11 bis 13, **dadurch gekennzeichnet, dass** der Katalysator ein Ionenaustauscherharz ist, ausgewählt aus der Gruppe der Kationenharze, auf denen Metalle fixiert sind, insbesondere Zink, Magnesium, Zinn, und aus der Gruppe der hydroxylierten oder bicarbonathaltigen, makroporösen Anionenharze.

**22.** Katalytisches Herstellungsverfahren nach wenigstens einem der Ansprüche 11 bis 13, **dadurch gekennzeichnet, dass** der Katalysator eine metallorganische Verbindung ist, ausgewählt aus der Gruppe bestehend aus Organomagnesium-, Organozink-, Organozinnverbindungen.

**23.** Katalytisches Herstellungsverfahren nach wenigstens einem der Ansprüche 11 bis 22, **dadurch gekennzeichnet, dass** der Katalysator in einer Menge von 0,01 Gew.-% bis 5 Gew.-% bezogen auf die in das Reaktionsmedium eingebrachte hydroxylfunktionelle Donorverbindung in das Reaktionsmedium eingebracht wird.

**24.** Katalytisches Herstellungsverfahren nach wenigstens einem der Ansprüche 11 bis 13, **dadurch gekennzeichnet, dass** der Druck, mit dem das Reaktionsmedium während des ersten Schrittes beaufschlagt wird, bevorzugt im Bereich zwischen $2.10^2$ und $5.10^4$ Pascal liegt.

**25.** Katalytisches Herstellungsverfahren nach wenigstens einem der Ansprüche 11 bis 13, **dadurch gekennzeichnet, dass** der Druck, mit dem das Reaktionsmedium während des zweiten Schrittes beaufschlagt wird, bevorzugt im Bereich zwischen $2{,}5\ 10^3$ und $2{,}5\ 10^6$ Pascal liegt.

**26.** Katalytisches Herstellungsverfahren nach wenigstens einem der Ansprüche 11 bis 13, **dadurch gekennzeichnet, dass** die Temperatur, auf die das Reaktionsmedium während des zweiten Schrittes erwärmt wird, mindestens gleich der Endtemperatur des ersten Schrittes ist und bevorzugt im Bereich zwischen 180°C und 220°C gewählt wird.

**27.** Anwendungen, einzeln genommen oder als Gemisch, der organischen Zusammensetzung, der Glycerolpolycarbonate, der [(α-hydroxymethyl)-oxyethylen/(α-hydroxymethyl)-ethylencarbonat]-Copolymere, die aus der genannten Zusammensetzung nach den Ansprüchen 1 bis 7 herausgelöst werden oder aus dem Verfahren nach den Ansprüchen 11 bis 26 hervorgehen, auf die technischen Gebiete der Schmierstoffe und Schmierstoffadditive, der Hydraulikflüssigkeiten, insbesondere feuerfesten Hydraulikflüssigkeiten, der Schmiermittel, insbesondere Industrieschmierstoffe, darunter Schmierstoffe für Metallbearbeitung und Metallumformung, bei Formtrennmitteln, Holzbehandlungs- und Holzverzierungsprodukten, in feuerbeständigen Verwindungen, bei Feuerschutzmitteln, Wasch- und Reinigungsmitteln, Benetzungs-, Verdickung- und Dispergieradditiven für die Erdölförderung und -produktion, bei der Wasseraufbereitung, im Kosmetik-, Pharmazie- und Ernährungsbereich, bei Zwischenstufen ihn der Chemie.

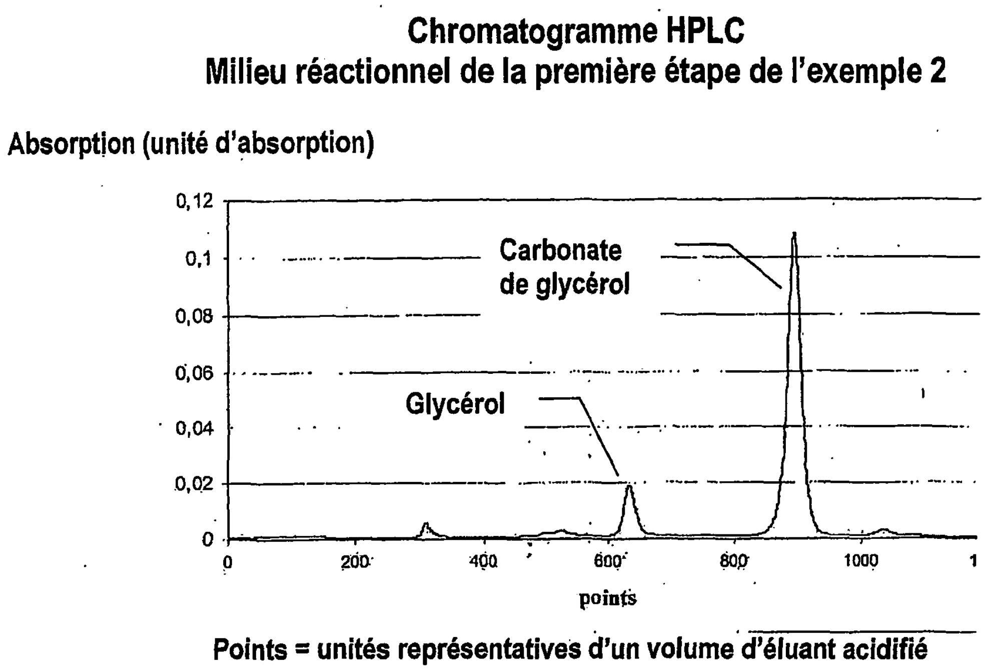


**Figure 1**

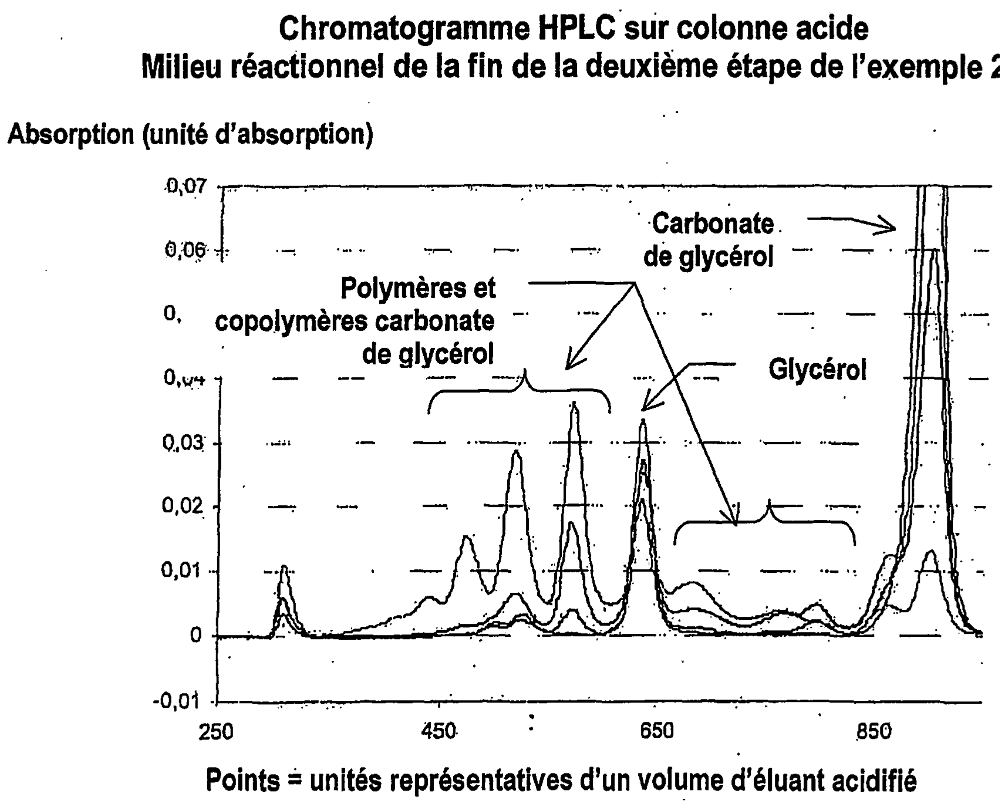


**Figure 2**

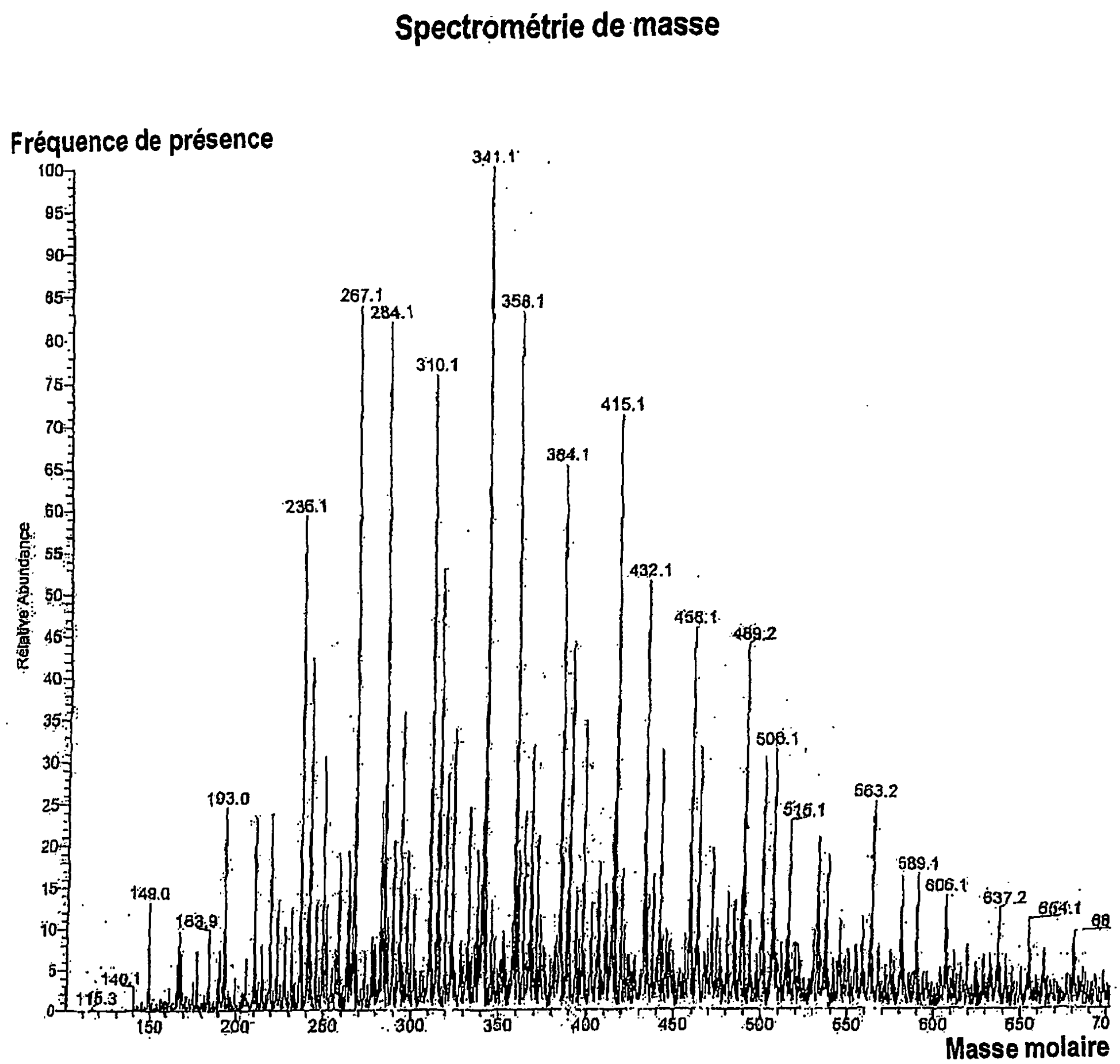
Spectrométrie de masse
Fréquence de présence
Relative Abundance
341.1
267.1
284.1
358.1
310.1
415.1
384.1
236.1
432.1
456.1
489.2
506.1
193.0
563.2
515.1
589.1
149.0
606.1
637.2
664.1
183.9
140.1
115.3
Masse molaire

Figure 3

**Spectre infrarouge de la composition issue de l'exemple 4**

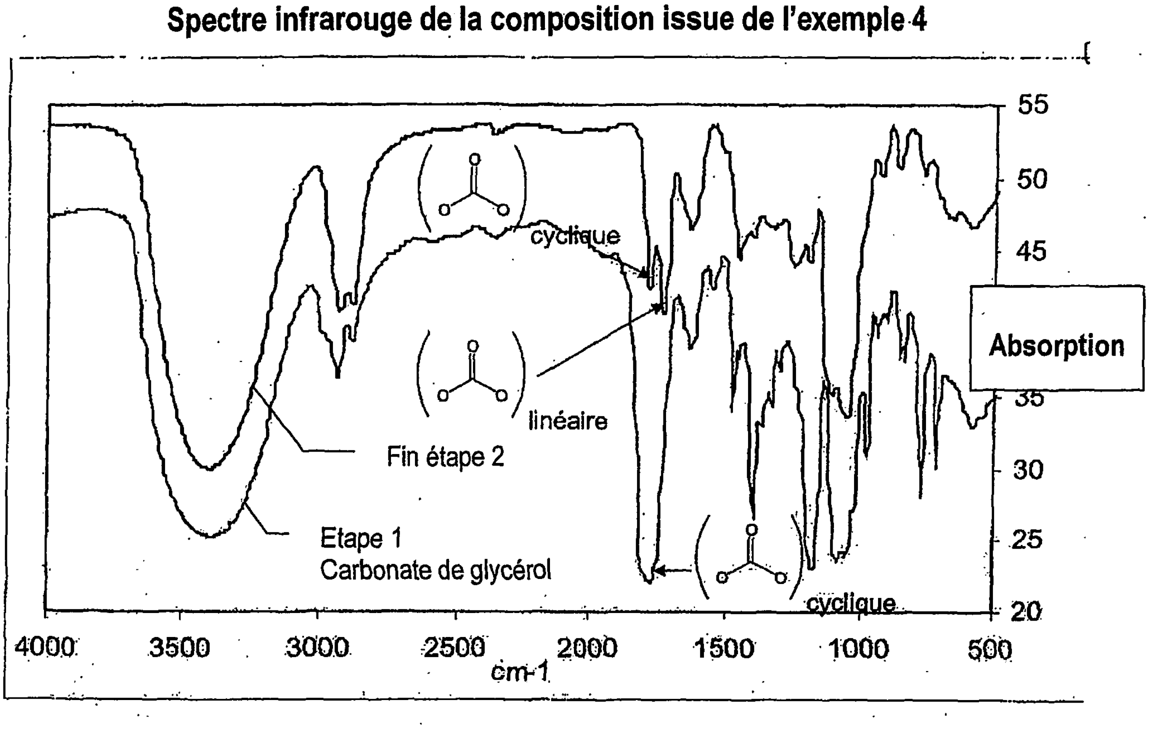


Figure 4

**Comparaison des analyses GPC pour des mélanges issus de la 2eme étape avec des températures opératoires selon les tableaux 1 et 2**

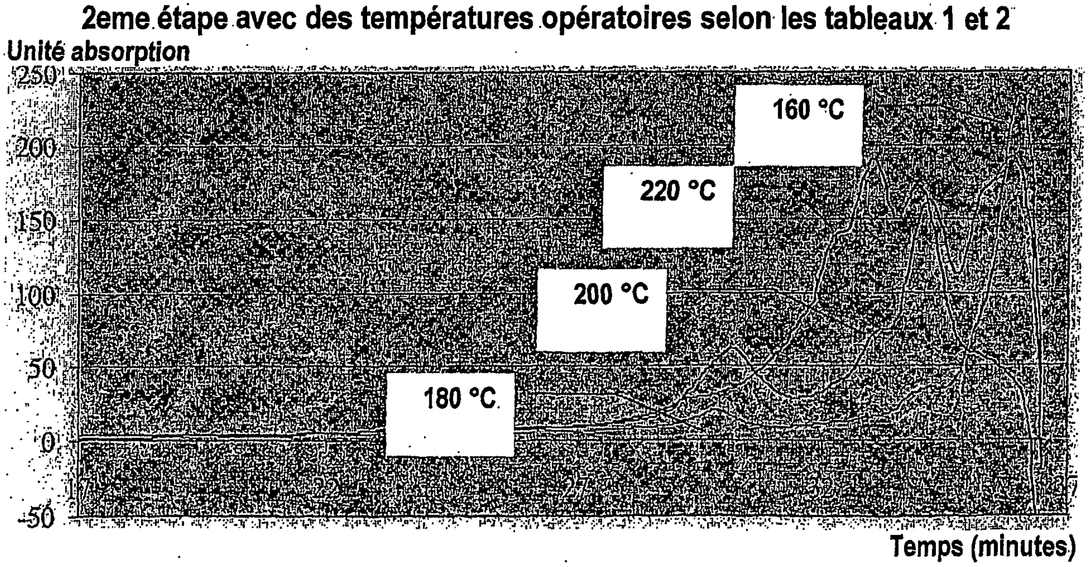


Figure 5

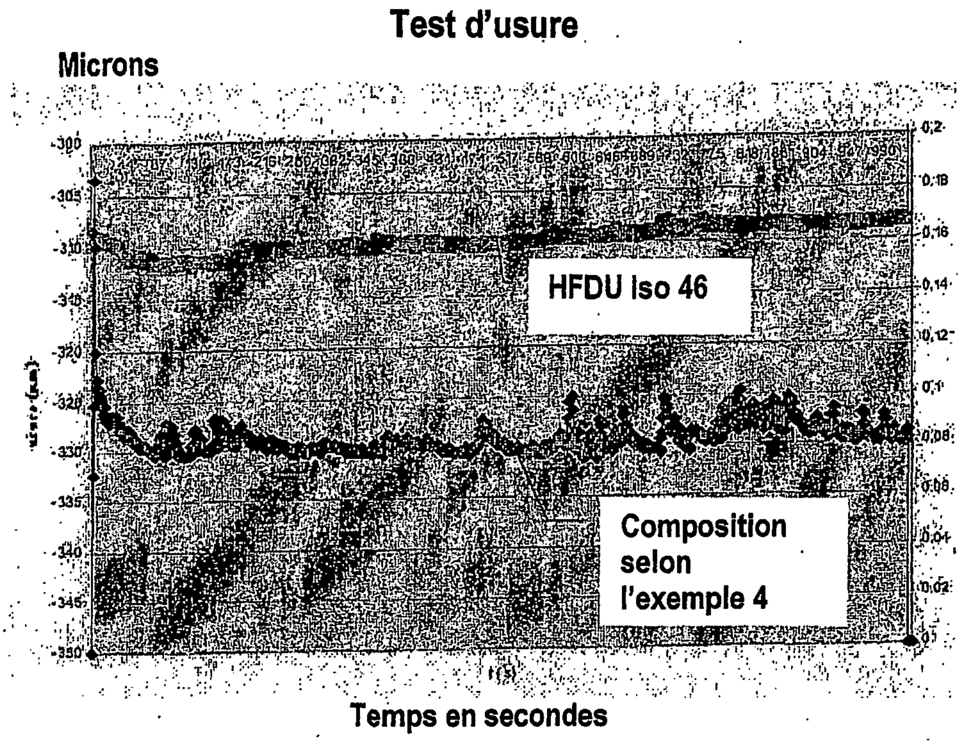


Figure 6

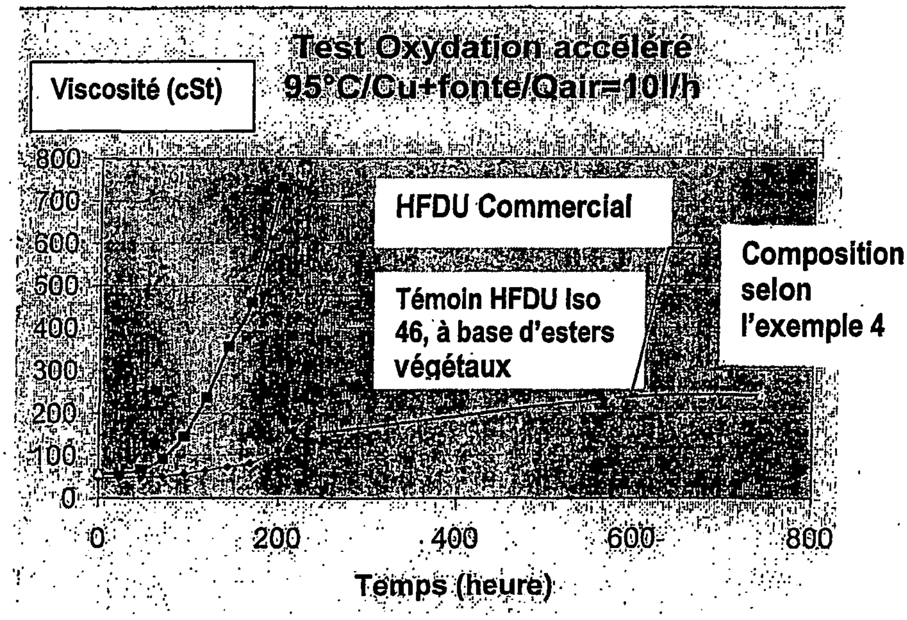


Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2915529 A
- EP 0739888 A
- FR 2778182
- FR 1182439
- US 5721305 A


### Littérature non-brevet citée dans la description


- *Polymer letters,* 1971, vol. 14, 169-165
- *Makromol. Chem,* 1990, vol. 191, 465-472
- « dégagement de chaleur d'une flamme stabilisée » (« Commission Européenne ». Exigences et essais applicables aux liquides difficilement inflammables utilisés pour les transmissions mécaniques et les régulations (hydrostatiques et hydrocinétiques)